(19)

**Europäisches Patentamt**

**European Patent Office**

**Office européen des brevets**

(11) **EP 4 083 852 A1**

(12) **EUROPEAN PATENT APPLICATION**

(43) Date of publication:
**02.11.2022 Bulletin 2022/44**

(21) Application number: **21382386.7**

(22) Date of filing: **30.04.2021**

(51) International Patent Classification (IPC):
*G06K 9/00* *(2022.01)*

(52) Cooperative Patent Classification (CPC):
**G06V 20/695**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Universidad de Sevilla**
  **41013 Sevilla (ES)**
- **Servicio Andaluz de Salud**
  **41071 Sevilla (ES)**
- **Dirección General de la Policía**
  **41011 Sevilla (ES)**

(72) Inventors:
- **GÓMEZ GONZÁLEZ, Emilio**
  **41013 Sevilla (ES)**
- **GUERRERO CLARO, Manuel**
  **41013 Sevilla (ES)**

- **MUÑOZ GONZÁLEZ, Francisco J.**
  **41013 Sevilla (ES)**
- **PARRILLA GIRALDEZ, Rubén**
  **41013 Sevilla (ES)**
- **REQUENA LANCHARRO, Desiré**
  **41013 Sevilla (ES)**
- **GIL GAMBOA, Pedro**
  **41013 Sevilla (ES)**
- **MÁRQUEZ RIVAS, Javier**
  **41071 Sevilla (ES)**
- **FERNÁNDEZ LIZARANZU, Isabel**
  **41071 Sevilla (ES)**
- **FERNANDEZ MUÑOZ, Beatriz**
  **41071 Sevilla (ES)**
- **NAVAS GARCÍA, José Manuel**
  **41011 Sevilla (ES)**

(74) Representative: **Pons**
**Glorieta Rubén Darío 4**
**28010 Madrid (ES)**

(54) **VIRUS DETECTION AND QUANTIFICATION METHOD IN FLUID SAMPLES BY DIGITAL PROCESSING DIFFUSE OPTICAL REFLECTANCE HYPERSPECTRAL IMAGES OBTAINED IN THE VISIBLE AND NEAR INFRARED RANGES**

(57) The present invention relates to a method for detecting and quantifying viruses in samples in the form of liquid droplets and dry residues deposited on a surface, by means of the digital processing of hyperspectral images of diffuse optical reflectance obtained in the visible and near infrared ranges, wherein the method comprises the steps of extracting pixels from the samples, delimiting the contour thereof; labelling and extracting the individual spectra from each pixel of the samples and from the support surface; calculating mean spectra; aligning the spectra in previously specified ranges; calculating estimators that quantify features of the spectra, classifying each individual pixel and each sample as positive or negative based on estimator values by means of statistical classification or classification by means of artificial intelligence; and quantifying the viral load by means of interpolation of estimator values.

Fig. 1

**EP 4 083 852 A1**

**Description**

**OBJECT OF THE INVENTION**

The present invention relates to a method for detecting and quantifying viruses by means of the analysis of hyperspectral images of diffuse optical reflectance in the visible and near infrared ranges, which enables determining the presence of viruses and, if applicable, the viral load present in a fluid sample, in the form of liquid droplets and/or dry residues, deposited on a surface by means of the digital analysis of each pixel of the recorded hyperspectral images.

The object of the invention is a method for detecting and quantifying synthetic lentivirus and coronavirus type viruses in fluid samples (of phosphate buffer solution, (PBS) and artificial saliva) and severe acute respiratory syndrome coronavirus 2 (SARS-CoV-2) in fluid samples (human nasopharyngeal discharge in inactivation medium and natural human saliva) by means of digital processing of hyperspectral images of diffuse optical reflectance obtained in the visible and near infrared ranges (with wavelengths comprised between 400-1000 nanometres (nm)). The method of the invention enables detecting and quantifying viruses without physical contact with the sample to be analysed and without using reagents.

**BACKGROUND OF THE INVENTION**

Lentiviruses are a type of ribonucleic acid (RNA) virus, with a lipid double layer structure, lenticular (ellipsoid) in shape with a mean diameter of about 100-120 nm. They are considerably similar to coronaviruses, in particular the virus that causes severe acute respiratory syndrome coronavirus 2 (SARS-CoV-2), in typology, composition, size and structure, although the latter is spherical in shape and exhibits spike proteins on the outer membrane thereof that are lacking on lentiviruses.

Lentiviral vectors (herein called "synthetic lentiviruses") are lentiviruses the genetic material of which has been modified so that they are neither infective nor pathogenic. Synthetic lentiviruses are routinely used in cellular and molecular biology laboratories to introduce exogenous genetic material into the nucleus of a cell. They are usually manufactured in a medium composed of a culture medium (e.g., DMEM) and a precipitant (e.g., LentiX) and are available for use as a solution in a fluid medium such as a phosphate buffer solution (PBS), herein called "saline". For some applications, particularly in medical and pharmacological research, they can also be arranged in artificial saliva.

Lentiviral vectors are used in basic research in molecular biology and medicine, in processes such as the introduction of exogenous genes into animal and human cells. They are also used in clinical applications on human patients as vectors of gene therapy, a field of medical research that consists of the insertion of functional elements into the cells of the individual. Synthetic lentiviruses have properties, morphology and size that are equivalent to natural (wild type) lentiviruses that cause diseases in humans such that they are also used as a model for studies about them, with lower biosafety requirements.

Synthetic coronaviruses are similar to synthetic lentiviruses but incorporate the spike protein on the outer membrane thereof. The severe acute respiratory syndrome coronavirus 2 (SARS-CoV-2) is the coronavirus that causes the 2019 coronavirus disease (COVID-19) which has spread globally since the beginning of 2020.

Since the COVID-19 disease was triggered, research on detection and quantification of viruses in general and of lentiviruses and coronaviruses in particular is especially active at the international level. In this context, synthetic lentiviruses and coronaviruses are widely used as an experimental and substitute model for SARS-CoV-2 coronaviruses given the similarity thereof and greater ease of handling with lower biosafety levels.

There are various methods for detecting and quantifying some types of viruses in liquid samples and in dry residues on surfaces. These methods can be classified into two large groups:

- Methods based on the analysis of biochemical properties and reactions, the detection of viral elements and the measurement of the infective capacity thereof.
- Methods based on the observation of samples by means of microscopy techniques.

From the point of view of the results they provide, the analyses to determine the presence of a virus in samples, both in liquid media or dry residues, deposited on a surface can be classified into:

- detection analysis: they enable determining whether the analysed sample has a virus or not. The result of this detection can be "positive", "negative" or "indeterminate".
- quantification analyses: they enable, in positive cases, determining the virus concentration or viral load. This can be evaluated numerically (expressed in standard units as the number of viral copies per millilitre (copies/ml) of the sample); in a classification by means of a scale made up of a discrete number of levels corresponding to certain numerical thresholds; or on a simplified scale with "high", "average" and "low" levels related to the corresponding numerical bands.

The methods for detecting and quantifying viruses in droplets or dried residues on surfaces require:

- the physical extraction of a sample from the droplet or residue to be analysed; and
- the combination of the sample with certain reagents, contrast means and other products.

The methods for quantifying the viral load take time, of the order of hours to days, to provide a result. Likewise, all known methods, except for some relatively inaccurate tests, must be performed by specialised personnel and in a laboratory with an adequate biosafety level, in other words, they cannot be performed *in situ,* at the same point where the patient is (point of care, POC), requiring transport under specific storage and safety conditions of the samples.
The methods for detecting and quantifying viruses of the most important lentivirus and coronavirus types are the following:

- Polymerase chain reaction (PCR). It is the current standard technique to diagnose the presence of SARS-CoV-2 that causes COVID-19 and other viruses that cause different viral pathologies. It can be quantitative or not. Quantitative PCR generates complete results in several hours and has the ability to quantify the viral load in clinical samples, whereas conventional PCR only enables qualitative analyses. In general, the main advantage of the PCR technique is that it is reliable, relatively inexpensive and can be quantitative, which is relevant since the amount of virus particles can be indicative of the severity and outcome of the disease.
- Detection of viral proteins. Viral proteins, including those of SARS-CoV-2, can be detected by means of immunofluorescence, although this technique is time-consuming, not quantitative and has been preferentially used in basic research, not having so much relevance in the clinical context. Antigen detection by means of lateral flow immunoassays, microfluidic devices, and other techniques has been adapted for detecting viral proteins and is part of rapid tests that are currently being used to detect COVID-19. Although they are fast and can be used at the same point where the patient is located (POC) without needing to transfer samples to external laboratories, the results are relatively unreliable.
- Serological methods. They consist of a blood test to detect specific antibodies. They are based on the fact that changes in the viral load during the course of the infection can make it difficult to detect viral proteins whereas, on the contrary, the antibodies generated in response to viral proteins can provide a wider time window to indirectly detect SARS-CoV-2 and other viral diseases, although the production thereof depends on the intrinsic features of each patient. Serological tests to detect immunoglobulin G and M antibodies from human serum of COVID-19 patients use an enzyme-linked immunosorbent assay (ELISA). They are more accurate for diagnosis than the detection of viral proteins, but they exhibit relevant drawbacks, as they are time-consuming and expensive.

There are also methods for measuring the capacity for cell infection:

- Measurement of the cytopathic effect. A sample suspected of being contaminated with SARS-CoV-2 or other viruses can be grown on the Vero E6 cell line or other types of cell lines. If the virus is present in the sample it will enter the cells, it will replicate and after three days of culture a cytopathic effect will be visible in the cells, such that it can be determined that the sample was contaminated with the virus. This technique enables determining whether there are actually infective viruses in the sample, but it is a poorly standardised qualitative method that does not enable a precise and sensitive diagnosis to be performed. In addition, it is necessary to have special facilities with a suitable biosafety level to perform this technique, which represents a major operational limitation. Likewise, not all viruses cause a cytopathic effect so only some can be detected by means of this method.
- Fluorescence measurement. Lentiviral vectors commonly used in the laboratory can be quantified by incorporating a coding sequence for a fluorescent protein into the virus. When the virus comes into contact with cells in culture, the presence of fluorescent cells (infected cells) can be detected and quantified by means of flow cytometry or fluorescence microscopy. This technique requires a genetic modification of the virus such that it can only be used in synthetic viruses.

At present, various techniques based on applied optics and photonics methods are being studied for detecting some types of viruses in plant, animal and human samples (including, very recently, SARS-CoV-2).
In a simplified way, optical methods for detecting viruses can be grouped into the following sets:

i. Methods by means of spectroscopy, including diffuse optical reflectance. Most use a single sensor element, like the end of an optical fibre, that receives the light reflected by the sample in the ultraviolet (UV), visible (VIS), near infrared (NIR) ranges or in the visible-near infrared (VNIR) combination. Some methods using hyperspectral cameras are also known.

ii. Methods implemented in microscopy systems. Accurate and sensitive, but they require very complex equipment and methods. They use the short-wave infrared (SWIR), medium-wave infrared (MWIR), thermal infrared and long-wave infrared (LWIR) ranges. They analyse very small samples. They can be combined with holography.

iii. Methods using physical optics techniques, such as interferometry and near field effects. Hardly studied in this type of application.

iv. Methods implemented in electro-optical chips and sensors. Usually of the optofluidic type, combined with the use of nanomaterials.

Optical detection of viruses is a subject of great scientific difficulty, specifically derived from the small dimensions of viruses, especially, those with dimensions less than the wavelengths of electromagnetic radiation in the optical range (e.g., the SARS-CoV-2 coronavirus has a mean diameter of 120-140 nm), the similarity of the refractive indices of viruses and the media in which they are found, the complexity of biological media and fluids (e.g., saliva) and the low concentrations in which it is important to detect them.

The available references exhibit initial results, in the form of pilot studies or proofs of concept, with single cases or short series, although in the last decade advances in image processing methods (computer vision), particularly by means of artificial intelligence (AI), have made the development of new analysis tools possible, and very recently, in the framework of the COVID-19 pandemic, research has been strongly promoted in all types of biosensors and virus detectors.

Thus, the use of optical spectroscopy techniques in the detection and quantification of viruses is being studied. Optical spectroscopy techniques are based on causing a beam of electromagnetic radiation (with wavelengths, frequency, energy or wave number comprised in the so-called "optical range", ranging from ultraviolet to infrared) to strike the sample to be analysed and to measure the energy re-emitted, transmitted, absorbed or reflected (both in a specular and diffuse manner) by the sample at each wavelength. This set of measurements constitutes the "spectrum" (or spectral record) of the analysed sample. Depending on the type of setup, the measured spectrum can contain the spectrum of the material on which the analysed sample is deposited or contained, which is called the "background spectrum". The background spectrum can be removed from the measured spectrum, obtaining it independently (performing a measurement in the same configuration, but without sample) and subtracting it to obtain the spectrum belonging to the sample of interest.

Optical spectroscopy experimental setups usually consist of:

i) a monochrome (like a laser) or broad spectrum (like a halogen lamp, fluorescent light or light-emitting diodes (LEDs)) light source,
ii) a collimating optical element,
iii) a suitable holder for the sample and
iv) a sensor or meter that collects the signal transmitted, emitted or reflected with each wavelength, and
v) a computer that records the measurements.

Samples can be in any state of aggregation (solid, liquid, gaseous or plasma). The most common devices for measuring absorption and transmission spectra arrange the sample in the form of a solution or gas in a vial that is crossed by the light beam. The devices used for reflection spectroscopy arrange an incident beam on the surface on which the sample to be analysed is deposited and the detector on a movable support system, so that the reflected light can be measured at different angles with respect to the direction of incidence or the plane of the surface.

Optical spectroscopy systems that record the signal coming from the sample on a single sensor provide only one measurement ("spot" optical spectroscopy), whereas hyperspectral cameras provide spectral records for each point within the captured visual field, such that they enable "optical image spectroscopy" to be performed.

According to the various hyperspectral camera technologies, the image can be obtained by means of the sequential recording of the signal coming from each point in the visual field (scanning technologies) or by simultaneously recording the signal from all points of the captured scene (snapshot-type technologies).

The optical spectra of the mixtures and combinations of elements verify the additivity condition, complying with the superposition principle, such that the resulting spectrum of a mixture or combination of substances can be considered as the sum of the spectra of the component elements, weighted by the relative concentration thereof.

Thus, spectroscopic techniques can be used to extract the characteristic spectra of various substances by numerical and algebraic operations and comparisons.

As the energy of the spectra emitted or absorbed by a sample is determined by the interaction of the incident electromagnetic radiation with the material of which it is composed, the different energy ranges, or the corresponding wavelength ranges thereof, enable data on the composition and structure thereof to be extracted.

In general, the visible-near infrared range (VNIR) enables information to be obtained from electronic transitions of the atoms; whereas the short-wave infrared range (SWIR) contains information about the vibrational modes of some molecules.

## DESCRIPTION OF THE INVENTION

The invention relates to a method for detecting and quantifying viruses, preferably of the types:

- synthetic lentivirus (lentiviral vectors) and synthetic coronavirus, present in fluid samples, which can be of the type "phosphate buffer solution" (PBS, herein called "saline") and artificial saliva, and
- SARS-CoV-2 present in fluid samples of human nasopharyngeal discharge in inactivation medium (of guanidinium salt type) and natural human saliva.

The samples can be both in the form of liquid droplets and dry residues deposited on surfaces, and the method is performed by means of the digital processing of hyperspectral images of diffuse optical reflectance obtained in the visible (VIS) and near infrared (NIR) ranges, specifically in the 400-1000 nm sub-band.

Unlike other techniques for detecting and quantifying viruses, this method of analysis does not require physical contact with the fluid medium or dry residue to be analysed, nor the use of reagents.

The term "sample" refers to a reservoir of fluid, in the form of a liquid droplet or dry residue, on a support surface on which the presence or absence of a virus is to be determined and, if positive, the concentration thereof. The so-called "known diagnosis" sample, droplet, residue or pixel refers to a sample, droplet, residue or pixel of which it is known whether or not they have a dissolved virus and, if positive, the concentration thereof; whereas the so-called "problem" or "unknown" sample, droplet, residue or pixel refers to a sample, droplet, residue or pixel of which there is a desire to know whether they are positive or negative with respect to the virus considered and, if positive, the concentration thereof.

To carry out the analysis of a fluid with respect to the presence or absence of a virus and, if positive, the concentration thereof, a certain number of samples would be analysed, preferably in the form of liquid droplets of the fluid.

The term positive refers to a sample that contains a virus, whereas negative refers to a sample without virus. The term indeterminate refers to a sample in which it has not been possible to determine whether it is positive or negative.

This method is applied using a set of algorithms wherein parameters and numerical values are required which depend on the virus to be detected, the medium in which the virus is produced (in the case of synthetic viruses), the fluid in which the viruses are dissolved and the support surface, or background, on which the samples are deposited, be it liquid droplets or dry residue, of unknown concentration, or "problem samples", in which the presence is to be determined and, if applicable, the concentration of the virus.

The method of the invention describes methodologies for obtaining the numerical values (parameters, thresholds) suitable for detecting the synthetic lentivirus, the synthetic coronavirus and the SARS-CoV-2. These numerical values are determined by the virus to be detected, the culture medium in which it was produced (in the case of synthetic viruses) and the fluid medium analysed, either phosphate buffer solution, artificial saliva, nasopharyngeal discharge in inactivation medium or natural saliva. The referred numerical values are obtained by processing a set of samples of known diagnosis and features and are applied for the analysis of unknown samples.

Thus, the method described enables detecting and quantifying synthetic lentiviruses and coronaviruses in samples of phosphate buffer solution and artificial saliva, and SARS-CoV-2 in nasopharyngeal discharge in inactivation medium and in natural human saliva in the form of liquid droplets and dry residue deposited on a surface, without physical contact with the analysed sample and without using reagents, by analysing the captured images in the visible and near infrared ranges.

Likewise, it enables differentiating samples (droplets or areas with dry residues) of serum, artificial saliva, nasopharyngeal discharge in inactivation medium and natural saliva, both positive and negative, from other droplets or areas with dry residues of other fluids with a similar visual appearance, such as water, ethyl alcohol and hydroalcoholic gel.

Lastly, the method described enables the simultaneous analysis of all the droplets or areas with dry residue included within the visual field captured by the optical system used, enabling the analysis of a large area or a large number of samples.

Likewise, this method exhibits a very high potential to be able to be extended to the detection and quantification of the viral load of other types of viruses dissolved in different fluids.

Following the described methodology, the parameters and numerical values that enable extending the described method for detecting and quantifying synthetic lentiviruses and coronaviruses, SARS-CoV-2 and other types of viruses in other culture media and dissolved in other fluids could be obtained.

This method of analysis can be implemented on a conventional personal computer or laptop, or on a mobile device, with suitable user interface and features.

Thus, the invention relates to a method for detecting and quantifying viruses in liquid droplets and dry fluid residues, preferably a phosphate buffer solution, artificial saliva, nasopharyngeal discharge in inactivation medium and natural saliva, deposited on a support surface, by means of the digital processing of hyperspectral images of diffuse optical reflectance obtained in the visible and infrared ranges, which comprises the steps of:

- Determining the pixels corresponding to the samples (liquid droplets or dry residue) in the analysed image. This determination, herein called "smart extraction of the pixels belonging to the samples", is carried out by segmentation of the samples using a principal component analysis (PCA) with 2 or more components to differentiate the pixels corresponding to the samples of those belonging to the support surface on which they are deposited, and to eliminate possible inhomogeneities or anomalous elements that may be found in the images of the samples.
- Extracting the spectrum of each pixel and labelling depending on whether they belong to the samples, or regions of interest (ROIs), or to the support surface, herein also called "background" (BG).
- Defining, manually or automatically, the contour of the samples (liquid droplets or dry residue) in the hyperspectral image. Pixels corresponding to the samples can also be represented on a false colour scale to verify that the labelling is correct.
- Generating a file that contains the spectra of all the pixels belonging to the samples.
- Preferably, applying a pre-processing step of the individual or mean spectra.
- Calculating the mean spectrum and standard deviation (STD) of the set of pixels that make up the image of a sample from the individual spectra of each pixel. In addition, graphs of the mean spectrum can be generated with a margin of error ($\pm$Error), equal to the standard deviation (STD) multiplied by a previously determined coefficient (No).
- Aligning the analysed spectra in previously specified spectral ranges by means of an alignment method comprising:

  ◦ validating that the specified ranges are within the spectra;
  ◦ checking that the spectra are discretised with the same wavelengths;
  ◦ generating a "colour map" type image of the spectra in each range, wherein each spectrum corresponds to a horizontal line of pixels, generating a "colour map number 1";
  ◦ normalising the spectra with respect to the maximum value of all of them for each one of the ranges and display them in a new colour map for each range, the "colour map number 2";
  ◦ aligning the normalised spectra in each range and representing the result obtained on a colour map for each range, the "colour map number 3"; and
  ◦ inserting the aligned spectra in each of the ranges in the file containing the original spectra, so that in the wavelength bands that do not belong to any of the ranges in which the alignment has been applied, the original spectra are maintained.

- Extracting and quantifying features belonging to the spectra by calculating estimators, quantifiers of the physical and mathematical features of the numerical functions constituted by the spectra in a certain band or spectral range. When calculating some of the estimators, a calculation of an interpolation fitting polynomial of the values of said estimators is performed against the concentration of the analysed samples (for each type of analysed fluid and instant of time). The fitting polynomials are obtained from the processing of the set of images of known diagnosis samples, and are subsequently used for quantifying the concentration (or viral load) of an "unknown sample" or "problem sample".
  The estimators can be calculated:

  ◦ in the full spectral range or in one or more "bands of interest" (BOI) thereof, wherein each BOI is defined by the wavelength range it comprises, and
  ◦ for the spectra of each individual pixel or for the mean spectra corresponding to a set of the same or to a specific region or area of interest of the analysed samples.

- Preferably, the application of an independence test, preferably of the Kolmogorov-Smirnov, K-S, type, to evaluate the similarity between mean or individual spectra.
- Classifying each individual pixel (classification by "pixel") as positive or negative based on:

  ◦ statistical classification (e.g., using algorithms of the partial least squares discriminant analysis (PLS-DA) type applied to the spectra,
  ◦ classification using artificial intelligence (AI) (e.g., using Deep Learning algorithms in neural networks) applied to spectra, bands of interest and calculated estimators.

In both approaches, both the PLS-DA model and the neural network provide a continuous variable as output, with a value comprised between 0 (absence of virus) and 1 (presence of virus). If this value is greater than a certain "classification threshold by pixel" (previously determined using the sets of training images), then the pixel is considered positive, and negative otherwise.

- In the event that the classification of each sample (liquid droplet or dry residue) is to be obtained as positive or negative based on the results obtained for each one of the pixels from the image thereof, the percentage of positive pixels with respect to the total of those that make up the image of the droplet or area of dry residue analysed is evaluated. If this percentage is greater than a certain "classification threshold by sample" (previously determined using the sets of validation and test images), then the sample (droplet or area of dry residue) is considered positive, and negative otherwise.

In the step of extracting and quantifying the features belonging to the spectra (and, if applicable, relative to the reference or background spectrum) in the analysed spectral bands (defined by the corresponding ranges of wavelengths thereof) the following estimators (E) can be calculated based on events seen in the spectra (or bands of interest thereof). The events analysed and the estimators that are calculated from them are:

- amplitude (E1)
- curvature (E2)
- compression (E3)
- kurtosis (E4)
- length (E5)
- determination of the possible "S shape" of the spectrum, in other words, oscillatory functional form (E6)
- determination of the horizontality of the spectrum, in other words, of a plateau shape (E7)
- area using Heron's formula (E8)
- angle between the line of fit of a spectrum and that of the reference spectrum (E9),
- determination of the higher curve (with respect to the reference) (E10),
- area under the curve of the spectrum considered with respect to the area of the reference spectrum (E11),
- change of slope (E12),
- relative mean difference between the analysed spectrum and the reference spectrum (E13),
- difference between the mean value of the analysed spectrum and the reference spectrum, relative to the mean values and areas (E14) thereof,
- number of local maxima (E15),
- number of local minima (E16),
- square difference between the analysed spectrum and the reference spectrum (E17),
- square difference of the mean values of the analysed spectrum and the reference spectrum (E18),
- relative area under the spectrum and the reference (E19)
- relative difference between the spectrum and the reference (E20)
- relative mean square difference between the spectrum and the reference (E21).

The method can further comprise a prior step of sample preparation to obtain hyperspectral images, comprising:

- establishing standard environmental conditions (e.g., with temperature in the range of 18°C to 25°C, relative humidity in the range of 40% to 60%, and a pressure of 1 atmosphere);
- arranging the fluids to be analysed in suitable containers;
- extracting sample droplets from fluids,
- depositing the droplets in the form of a "mosaic" arranged in rows and columns on a suitable piece of material, herein called "support surface";
- preferably depositing the support surface on a "sample holder" part and this part, or the support surface itself, in turn, on a table or work surface, in one location, more preferably centred, within the visual field captured by the camera that will record the hyperspectral images.

The referred "support surface" on which the samples are deposited must be, very preferably, made of a material the reflectance (reflectivity) of which in the spectral range recorded by the hyperspectral camera is similar (or with relatively little variation) at all recorded wavelengths, and the properties of which do not vary over time and under the conditions of the process. A suitable material for the support surface in the visible-near infrared spectral range is, e.g., polytetrafluoroethylene (PTFE).

Likewise, the method may comprise a prior step of obtaining calibration patterns for hyperspectral images including:

- obtaining a "white reference image" (or "white calibration image") by recording a white reference surface adjusting the exposure to prevent saturation of the signal; and
- obtaining a "black reference image" (or "black calibration image"), recording an image without energy entering through the lens to determine the effect of background noise.

For analysing dry residue, the method may comprise a prior step of drying the liquid samples that does not alter the features or arrangement thereof on the support surface. This drying can be achieved by exposing the droplets to suitable luminous irradiation (illumination), or, simply, allowing them to dry for a sufficient time according to the environmental conditions, until a dry residue forms on the support surface.

The method described is based on the analysis of hyperspectral images, such that it may comprise a step of obtaining said hyperspectral images at regular time intervals, obtaining:

- an image at an instant called "T0", immediately after depositing the liquid droplets (this image corresponds to the sample in liquid state);
- an image at an instant called "T5", (at least) 5 minutes after depositing the liquid droplets, under equivalent irradiation (illumination), for example, in indirect sunlight at noon (this image corresponds to the sample in a partially dry state) and
- an image at the instant called "T10", (at least) 10 minutes (or longer if necessary) after depositing the liquid droplets under irradiation, such that the droplets have completely dried (this image corresponds to the sample in a dry state, herein called "dry residue").

In the hyperspectral image recorded, each sample (drop) corresponds to a certain number of pixels. The minimum number of component pixels of the image of a droplet that are needed to be able to apply the described method depends both on the features of the sample (type of fluid, concentration of the virus) and on the optical features of the lens (transmissivity, absorption) and of the camera sensor (resolution). Thus, the features of the optical system and the volume of the samples to be analysed must be such that the image of each sample corresponds to at least a certain number of pixels.

As an example, for samples in the form of droplets with a volume of 5 microlitres (uL), the optical system must be such that the image of a droplet corresponds to a minimum number of several hundred pixels per droplet. In the event of using a hyperspectral camera with scanning technology, the dimensions (in pixels) of the recorded image are obtained as the product of the dimension (in pixels) of the linear sensor by the number of lines obtained as a result of the scan of the visual field carried out. In the event of using a hyperspectral camera with technology for simultaneous capture of the visual field (snapshot technology), the dimensions in pixels of the recorded image are defined, directly, by the dimensions (in pixels) of the sensor.

In turn, the number of spectral bands provided by the hyperspectral camera depends on the features thereof, typically being of the order of several hundred bands, with a spectral width of each band that can be less than ten nanometres.

Obtaining hyperspectral images can be carried out by setting suitable geometric and spatial resolution parameters for capturing the images.

The method may also comprise a step of calibration and pre-processing of the hyperspectral reflectance images recorded, prior to analysis thereof, which includes at least one of the following operations:

- black and white calibration, calculating the relative reflectance, using the formula

$$R = (I - D) / (W - D)$$

wherein R is the corrected image, I is the uncorrected image, W is the white calibration or reference image and D is the black calibration or reference image;
- application of an offset (Ao), or a value to add to the reflectance signal to eliminate possible problems in subsequent transformations (due to null values):

$$Ao = |I - D|$$

$$A1 = R + Ao$$

- conversion of reflectance values to pseudo-absorbance values using the formula:

$$A2 = \log_{10}(1 / A1)$$

wherein A2 is the pseudo-absorbance image;
- application of a rotation to correct possible effects of rotation of the sensor or of orientation of the image; or
- application of a cut-out to eliminate peripheral areas and reduce the processing load, defining a region of interest (ROI) in the image to be processed.

The method of the invention may further comprise a step of selecting the appropriate pixels for the analysis, by means of a statistical analysis using a second application of the method of principal component analysis (PCA), by default with 1 or more components, that in addition to delimiting the pixels belonging to the samples, differentiating them from those corresponding to the support surface, enables identifying the pixels belonging to inhomogeneities or other types of anomalies (such as bright or shadow areas due to illumination, contaminating elements that may be found in the sample), and define them as "invalid" for analysis, such that a label is generated which identifies the valid pixels and the generated file is edited so that it comprises the spectra of all the pixels belonging to the droplets and the labels indicative of the valid pixels and invalid pixels.
The method of the invention may also further comprise steps of

- labelling the pixels of the samples based on attributes such as the type of fluid to which they correspond, the type of virus they contain and the concentration thereof, the material of the support surface (background) and the time since the deposition of the samples on the same, and
- modifying the file so that it comprises the generated labels.

This process of labelling samples with known features of the virus type and the concentration thereof is necessary for building the sets of training, validation and test samples required to obtain the parameters and numerical values of the classification algorithms.
Likewise, when unknown samples ("problem samples") are processed, a labelling process is necessary prior to the analysis thereof, indicating the type of fluid to be analysed and the support surface on which they are located.
The labelling can be visually reviewed by generating a colour-scale representation of the labelled pixels that enables detecting possible errors in the assignment of the aforementioned labels and in the segmentation of the samples or of the background areas.
The method of the invention may further comprise, prior to the step of extracting and quantifying features of the spectra, a step (also called "spectra pre-processing step") comprising the application (to the spectra) of at least one filter from the following:

- a Savitzky-Golay filter, which enables the spectra to be smoothed and noise to be reduced. This filter is applied with suitable values of the parameters thereof (degree of the polynomial and "window width" or number of bands) according to the features of the spectral records provided by the hyperspectral camera used;
- a standard normal variate (SNV) which subtracts the average and divides by the standard deviation; and/or
- a correction of the base line.

A step of modifying the files comprising the spectra (of the individual pixels, of the mean values thereof and of the reference or background) can also be included by adding columns with the values of the estimators calculated in the entire recorded spectral range or in each defined band of interest.
The method of the invention further comprises a classification step in which it is determined whether each pixel of the analysed sample is positive (presence of virus) or negative (absence of virus). This classification of each individual pixel can be performed by means of two methods:

- statistical classification by means of algorithms of the partial least squares discriminant analysis (PLS-DA) type applied to the spectra;
- classification by means of artificial intelligence (AI) using algorithms (e.g., machine learning (ML) or deep learning (DL) based on neural networks.

The result of the classification of each pixel (by means of statistical classification or by means of artificial intelligence) is a continuous output variable with a numerical value comprised between 0 (negative sample) and 1 (positive sample). For this output variable, a "classification threshold per pixel" (also called "threshold per pixel", threshold-px) is defined so that, for each pixel, if the value of the output variable (corresponding to the pixel) is greater than the referred threshold, then the pixel is classified as positive and if it is lower, it is then classified as negative.

Once the individual pixels have been classified, a sample (droplet or area with dry residues) can be classified, counting the number of positive pixels belonging to the same, and evaluating whether the percentage thereof with respect to the total number of those that make up the sample is greater than a threshold (herein called "threshold per sample" or "threshold per droplet" (threshold-droplet, threshold-drop)). In the event that the percentage of positive pixels in the sample is greater than this threshold, then the sample is classified as "positive" and, otherwise, as "negative".

The values of the "classification thresholds per pixel and per sample" can be determined by applying the classification algorithms to the set of known diagnosis samples (training, validation and test sets) and obtaining corresponding confusion matrices and "receiver operating characteristic" (ROC) curves. These curves are obtained by representing the sensitivity (SE) versus the specificity (SP) of the detection for different values of the classification thresholds per pixel and per sample. The value of the area under the curve (between 0 and 1) is identified as AUROC (*area under the ROC*). The determination of the threshold from which a positive or negative result is determined can be performed by choosing the threshold that optimises the sensitivity and specificity in the ROC curve for each type of fluid and status of the sample analysed (liquid droplet or dry residue) or by giving preference to sensitivity (enhanced sensitivity). Enhanced sensitivity may be useful in the event of applying the proposed method in circumstances wherein it is preferable to increase this parameter (sensitivity) even at the cost of reducing the specificity of the detection results.

The values of the classification thresholds per pixel and per droplet are chosen in such a way as to optimise the sensitivity and the specificity of the detection for the samples that constitute the training, validation and test sets.

Likewise, the method of the invention may comprise a step of quantifying the viral load of the samples (pixels or droplets) classified as positive. This quantification is performed by calculating the estimators E11, E13, E14, E17, E18, E19, E20 and E21 - in the bands of interest for the individual spectrum of pixels (in the event that the viral load in one pixel is calculated) or for the mean spectrum (in the event that the viral load in a set of pixels is calculated) - and the subsequent determination of the concentration from the fitting polynomials of the values of the estimators previously obtained (from the sets of known samples) for the component fluid of the analysed sample.

Also, once a set of samples from a patient has been classified as positive or negative, a classification of said patient as positive or negative can be obtained by determining the percentage of his or her samples that are positive and comparing them with a threshold for classification of samples.

For training with the classification algorithms, both of the statistical (PLS-DA) and the artificial intelligence (deep learning) type, known samples are analysed and the files generated are used for classification learning, extracting a vector with the column corresponding to the diagnosis and a matrix with the estimators calculated for all the spectra.

The statistical classification algorithm can be of the partial least squares discriminant analysis (PLS-DA) type, with a sufficient number of latent variables to include the desired variance of the data. By default, a minimum of 3 latent variables are taken which preserve at least 80% of the variance.

The neural network used can be of the "pattern recognition neural network" type, made up of layers, wherein:

- there is a set of layers called hidden layers, wherein neurons are of the "sigmoid response" type; and an output layer with one or more neurons of the normalised exponential function type (also called softmax function).
- each neuron of the first hidden layer has a direct connection with one of the inputs of the network,
- the neurons of the subsequent layers (hidden layers) are interconnected with all the neurons of the previous layer and the immediately subsequent layer.
- the neuron of the final layer (output layer) is connected to all the neurons of the previous layer, and produces the output comprised in the range from 0 to 1.

The structure of the network corresponds to the feed-forward type of deep learning. These feed-forward networks are made up of a certain number of hidden layers (20 layers by default), wherein each layer is made up of a number of neurons linked together, and wherein each link has a different weight, and an output layer. Each hidden layer is made up of a number of neurons (Nc) defined by the product of the number of estimators applied (N1) to each band of interest by the number thereof (N2) so that the number of neurons per layer is Nc = N1*N2 and the total number of neurons in the network is Nn = Nc + 1. The output of the network corresponds to a value comprised between 0 and 1, which determines the probability of the samples being positive.

The invention also relates to a computer program adapted to carry out the steps of the described method and to a computer-readable storage medium comprising said computer program.

The described method can be implemented in any type of computer or processor (with minimum performance that is equivalent to a conventional personal computer).

In addition, the method uses a standard setup for obtaining hyperspectral images in a diffuse optical reflectance configuration. This setup, also known as "optical image spectroscopy", is a relatively common optical technique that uses a camera (with a relative displacement system with respect to the sample in some technologies) equipped with a lens and an illumination system suitable for the spectral range to be recorded.

Today, the technology for obtaining hyperspectral images is rapidly advancing towards systems similar to conventional photographic cameras, that are user-friendly and low-cost.

The described method does not require physical contact with the sample to be analysed or the use of reagents or agents on the sample.

Likewise, the method enables the simultaneous analysis of the entire visual field captured by the hyperspectral camera. Particularly, if a set of liquid samples is available (in the form of distributed droplets, for example, in the form of a matrix), this method enables all of them to be analysed. In this way, a large number of analyses can be performed per unit of time.

In contrast, optical microscopy techniques for detecting viruses analyse a very narrow visual field (microscopic image) and require very complex optical setups and, if applicable, the addition of elements to the analysed sample.

The method described enables detecting and quantifying synthetic lentiviruses prepared in phosphate buffer solutions and artificial saliva in the visible and near infrared spectral ranges.

In addition, to avoid dependence of the results on the properties of the surfaces on which the droplets are deposited, during processing, squares of the background with a size similar to that of the droplets are selected and the mean spectrum thereof is calculated, called "background" (BG), and the estimators are calculated as numerical values relative to the referred background (BG).

The method can be extended to the detection and quantification of viruses in other fluid media and surfaces. For this, appropriate sets of images obtained in the spectral ranges considered of interest would be used, and training, validation and test samples would be generated and processed in order to obtain the parameters and specific numerical values for each application.

By means of the proper selection of optical equipment (visual field, spatial resolution, spectral resolution, sensitivity and signal provided by the sensor), in other words, of the lens and camera used to obtain the hyperspectral images and of the illumination light source, the results provided by the proposed method can be optimised.

The processing time required depends, mainly, on the features (spectral resolution, spatial resolution and digitisation depth) of the hyperspectral images to be analysed and of the performance of the computer on which it is run.

The method of the invention can be extended for use by people without special qualifications by providing an operational hyperspectral camera and a suitable user interface.

The method can be implemented:

- in a conventional hyperspectral imaging system, in which the sample and the light source are arranged on a specific support and the camera is connected to an adjacent computer,
- in a system separated into two portions, such that the optical equipment and the processing computer are located in different rooms, connected by cable or wirelessly, and
- in an integrated portable system of the "smartphone", tablet or similar type, equipped with a suitable camera and illumination system.

As explained, the invention relates to an image processing method and, therefore, the results it provides depend, first, on the suitability and features of the images that are analysed.

Thus, in the frame of the invention, the detection sensitivity of the method disclosed depends, essentially, on the optical features of the setup with which the hyperspectral images that are processed are obtained:

- The spatial resolution and the amplitude of the analysed area are determined by the optical features of both the objective lens and the camera with which the hyperspectral images are captured. Particularly, the focal distance and aperture (shutter number) of the lens and the size of the sensor determine the captured visual field, and, accordingly, the extent of the area that can be analysed, and the spatial resolution of the captured image and, therefore, the size of the smallest sample point that can be analysed.
- Detection sensitivity, in other words, the lowest detectable virus concentration, is determined by the spectral resolution and the signal (digitisation depth and signal-to-noise ratio) provided by the sensor and by the features of the illumination light sources. Such that by increasing such performance sensitivity is increased, reducing the detectable virus concentration.

Furthermore, the specificity of the detection and classification obtained depends on the procedure for assigning the viral load detection and quantification result to each problem droplet from the corresponding classification values of each individual pixel of the droplet.

## DESCRIPTION OF THE DRAWINGS

To complement the description that is being made and for the purpose of helping to better understand the features of the invention, according to a preferred practical exemplary embodiment thereof, a set of drawings is attached as an integral part of said description, wherein the following has been depicted, with an illustrative and non-limiting character:

Figure 1 shows a general flow diagram of an embodiment of the method of the invention.
Figure 2 shows a flow diagram of Block 1 of the embodiment of the method of the invention of Figure 1.
Figure 3 shows a flow diagram of Block 2 of the embodiment of the method of the invention of Figure 1.
Figure 4 shows a flow diagram of Block 3.1 of the embodiment of the method of the invention of Figure 1.
Figure 5 shows a flow diagram of Block 3.2 of the embodiment of the method of the invention of Figure 1.
Figure 6 shows a flow diagram of Block 3.3 of the embodiment of the method of the invention of Figure 1.
Figure 7 shows a flow diagram of Block 4 of the embodiment of the method of the invention of Figure 1.
Figure 8 shows a flow diagram of Block 5 of the embodiment of the method of the invention of Figure 1.
Figure 9 shows a flow diagram of Block 6 of the embodiment of the method of the invention of Figure 1.
Figure 10 shows a flow diagram of Block 7 of the embodiment of the method of the invention of Figure 1.
Figure 11 shows a flow diagram of Block 8 of the embodiment of the method of the invention of Figure 1.
Figure 12 shows a flow diagram of Block 9 of the embodiment of the method of the invention of Figure 1.

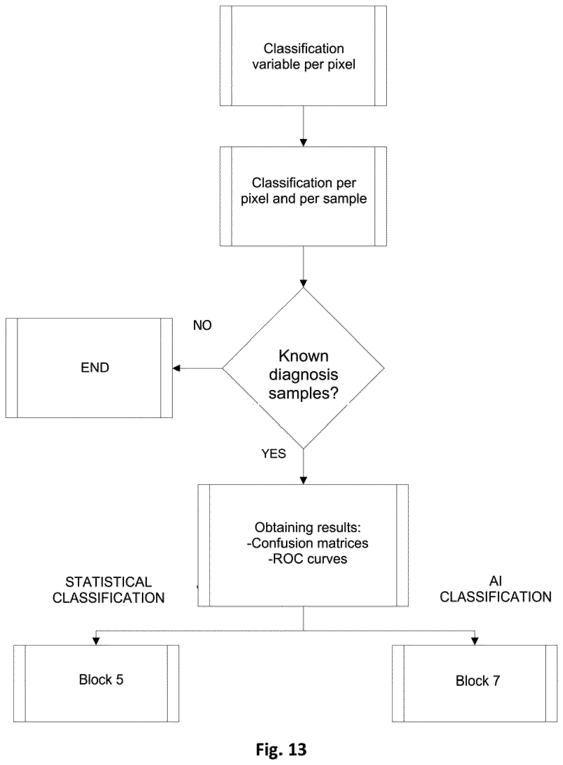

Figure 13 shows a flow diagram of Block 10 of the embodiment of the method of the invention of Figure 1.

## PREFERRED EMBODIMENT OF THE INVENTION

The invention relates to a method for detecting and quantifying viruses preferably of the synthetic lentivirus or coronavirus types, present in samples, liquid droplets or dry residue, of fluids, preferably of the "phosphate buffer" ("saline") and artificial saliva types, and

- SARS-CoV-2, present in samples of nasopharyngeal discharge in inactivation medium (of guanidinium salt type) and natural saliva, deposited on surfaces, by means of the digital processing of hyperspectral images of diffuse optical reflectance obtained in the visible (VIS, 400-780 nm) and near infrared (NIR) ranges, in the 780-1000 nm sub-band).

The method of the invention in a preferred embodiment combines:

- Algorithms for reading, calibration and pre-processing of the images provided by a hyperspectral camera in the visible and near infrared ranges, corresponding to each point, or pixel, of a sample captured by the camera.
- Algorithms of segmentation of the hyperspectral images obtained to delimit the areas or regions of interest thereof to be analysed.
- Statistical analysis algorithms using principal component analysis (PCA) to determine the pixels of the images that belong to the samples to be processed, and that enable identifying and eliminating those pixels corresponding to impurities or possible anomalous elements.
- Algorithms of pre-processing and statistical characterisation of the spectral records of each pixel of the samples of phosphate buffer fluids and artificial saliva, both with dissolved lentiviruses or coronaviruses and without them, and other fluids of similar or indistinguishable visual appearance, such as water, ethyl alcohol, hydroalcoholic gel or others.
- Algorithms that quantify physical and mathematical properties, called "estimators", of the spectral records in certain wavelength ranges or bands, used to determine whether a spectral record corresponds to a positive or negative sample.
- Statistical algorithms of partial least squares discriminant analysis (PLS-DA) based on spectral records and on estimator results (applied to spectral records) from a set of known diagnosis samples. These algorithms generate classification models and belong to the generic type called "statistical classification".
- Algorithms of generation (construction), training and application of an artificial neural network based on the results of the estimators applied to the spectral records of a set of known diagnosis samples. These algorithms belong to the generic type called "artificial intelligence" (AI).
- Algorithms to determine the virus concentration or viral load, in positive samples, and the concentration of the culture medium thereof, in negative samples in which this medium is present, from the values of the calculated estimators.
- Algorithms of classification of each sample or area of the visual field captured by the optical system according to the classification values of each point (pixel) that is part of the sample or area analysed.
- Algorithms of statistical evaluation of the detection and classification results obtained, by obtaining confusion matrices and ROC curves, both "per pixel" and "per sample" and "per patient".

The processing method comprises an ordered set of algorithms with parameters and numerical values, such as thresholds, which have been obtained using image processing of known diagnosis samples as described below.

The proposed method has been evaluated by applying the "artificial intelligence" type algorithms to three different and independent sets of known samples, called "training, validation and test sets". In the event of using the algorithms of statistical classification, this same set of known samples is divided into two different and independent sets called "training and validation sets".

Parameters and numerical values, as well as the artificial neural network generated and the detection and classification results thereof, can be enhanced or optimised by processing a broader set of training images.

The described method could also be extended for detecting and, if applicable, quantifying synthetic lentiviruses, coronaviruses and other types of viruses under other conditions and with other experimental setups and equipment by obtaining the corresponding parameters and numerical values. This requires having a few minimum sets of training, validation and test samples.

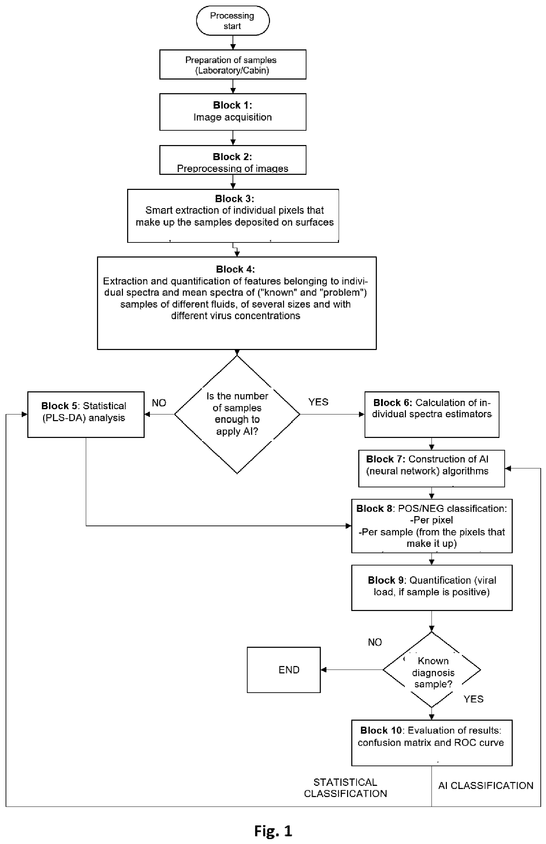

The method of the invention is based on the analysis of spectra of individual pixels of the samples (liquid droplets or dry residues) and the corresponding mean spectra thereof, relative to mean spectra of the surface or background on which they are deposited. Figure 1 shows a preferred embodiment of the method of the invention.

The preparation of the fluid samples for the analysis thereof by means of the method of the invention must be performed under the same environmental conditions under which the samples belonging to the training sets of the algorithms were processed. These environmental conditions can be standard, with a temperature in the range of 18°C to 25°C, a relative humidity in the range of 40% to 60%, and a pressure of 1 atmosphere. Fluids must be arranged in suitable containers, such as vials.

The sample preparation process may comprise the steps of:

- extraction, for example, using a pipette, of sample droplets with suitable volume (by default, 5 microlitres) so that the image of each sample corresponds to a suitable number of pixels (by default, at least several hundred),
- deposit of the droplets in the form of a "mosaic" arranged in the form of rows and columns on a support surface of suitable material (for example, polytetrafluoroethylene, PTFE),
- depositing the support sheet on a "sample holder" part made of suitable material and this part, in turn, on a surface within the visual field of the camera.

The configuration used for obtaining hyperspectral images corresponds to a standard setup for obtaining hyperspectral images by means of diffuse optical reflectance in the visible and near infrared ranges. The samples to be analysed are deposited on a horizontal surface and the camera is placed on them, oriented in the vertical direction perpendicular with respect to said surface.

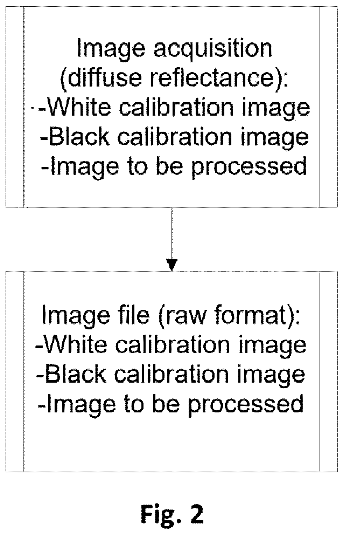

In the process of obtaining hyperspectral images, the first step is to turn on the illumination means, for example, halogen spotlights, and proceed to obtain two images that will constitute the calibration patterns ("white reference or calibration image" and "black reference or calibration image"), as shown in Figure 2. The "white reference image" is obtained by recording a white surface used as a pattern (for example, a standard pattern of diffuse reflectance of the fluoropolymer type, with Lambertian-type diffuse reflection in the spectral range captured by the camera) adjusting the exposure to prevent saturation of the signal. The "black reference image" is used to eliminate the effect of possible background noise. This image is obtained by recording a hyperspectral image without energy entering through the lens. For this, the lens is blocked with an opaque cover. Next, we proceed to conventionally obtain the images of the samples to be analysed.

Once the set of samples has been arranged in the form of liquid droplets on the support surface, a drying process is carried out in the open or by exposing the droplets to irradiation from the light sources used in environmental conditions. As the samples dry, and according to the composition thereof, a dry residue remains on the Teflon sheet.

The process of obtaining hyperspectral images at regular intervals comprises obtaining:

- an image at the instant called T0: immediately after depositing the droplets, such that the samples are in a liquid state on the support surface;
- an image at the instant called T5: when (at least) 5 minutes have passed after depositing the liquid droplets (optionally under the indicated illumination); and
- an image at the instant called T10: when (at least) 10 minutes have passed after depositing the liquid droplets (optionally under the indicated illumination) so that the samples have dried and generated a dry residue. Depending on the environmental conditions, it may be necessary to wait longer than the aforementioned 10 minutes until all droplets in the sample are visually deemed dry.

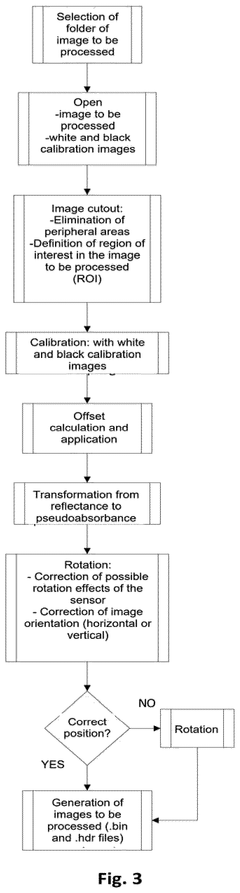

Next, the pre-processing of the hyperspectral images obtained is performed by means of the following operations, shown in Figure 3:

- black and white calibration, calculating the relative reflectance, using the formula

$$R = (I - D) / (W - D)$$

wherein R is the corrected image, I is the uncorrected image, W is the white calibration or reference image and D is the black calibration or reference image;

- application of an offset (Ao), or a value to add to the reflectance signal to eliminate possible problems in subsequent transformations (due to null values):

$$Ao = |I - D|$$

$$A1 = R + Ao$$

- conversion of reflectance values to pseudo-absorbance values using the formula:

$$A2 = \log_{10}(1 / A1)$$

wherein A2 is a pseudo-absorbance image;
- application of a rotation to correct possible effects of rotation of the sensor or of orientation of the image; or
- application of a cut-out to eliminate peripheral areas and reduce the processing load, defining a region of interest (ROI) in the image to be processed.

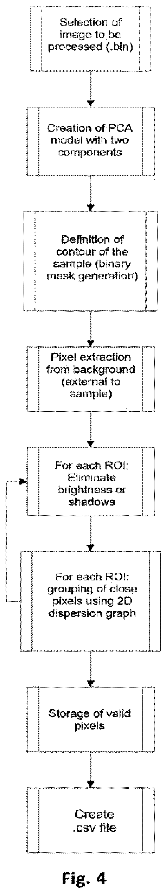

Next, a process of smart extraction of the pixels corresponding to the samples (liquid droplets or dry residues) deposited on the surfaces is performed, as shown in Figure 4. To this end, the pixels corresponding to the samples are identified, the spectrum of each pixel is extracted, they are labelled according to whether they belong to the regions of interest (ROI) or the background (BG) and the labelling is verified for correctness.

The pixels belonging to the samples are identified by means of a principal component analysis (PCA) applied to hyperspectral images to obtain a suitable segmentation of the samples. First, a PCA statistical analysis is performed with 1 or 2 components to differentiate the pixels of the samples from those of the surface on which they are deposited. Results can be displayed on a false colour scale in order to delimit, manually or automatically, the contour of the samples in the hyperspectral image.

Also, pixels that are suitable for analysis can be selected by means of a second PCA analysis with 1 or 2 components that enables identifying pixels that are invalid for the analysis, such as those corresponding to inhomogeneities or anomalies inside the droplets (such as dots or brightness, among others) such that a label is generated that identifies the pixels that are valid for the analysis, in other words, the pixels that belong to homogeneous areas of the samples.

Finally, a file is generated that contains the spectra of all the pixels belonging to the samples and the labels indicating the validity of each one.

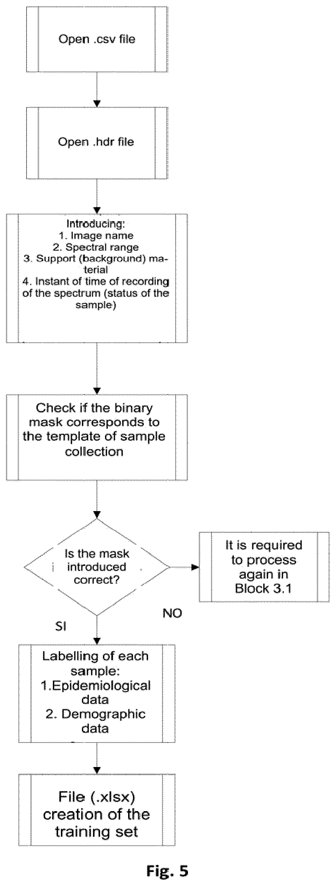

The generated file can be edited, such that it is manually or automatically labelled based on attributes such as the type of virus and the concentration thereof (known in the event of the samples belonging to the training and validation sets of the algorithms), sample fluid, material on which it is deposited, time since deposition, among others. Then, the spectrum of the valid pixels is extracted, generating a file with the spectra of the valid pixels, accompanied by the included labels, as shown in Figure 5.

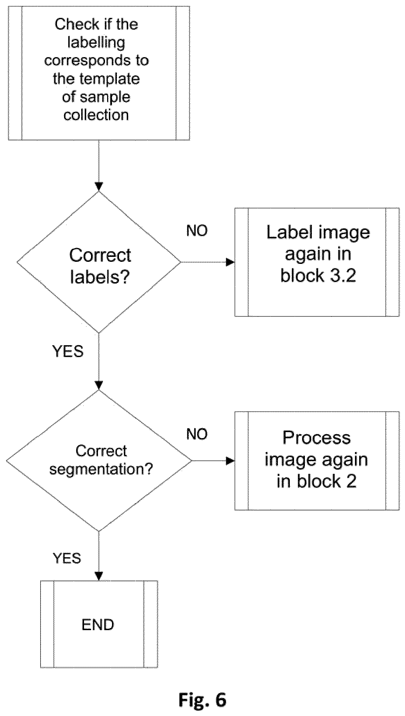

Next, a review or verification of the labelling is carried out, as shown in Figure 6. To this end, the file is loaded and the features to be reviewed are selected and then all the labels are verified for correctness. To this end, a colour-scale representation of each feature can be performed to enable a visual review of the labels thereof and the identification of possible errors in the labelling or in the segmentation of the samples or the background.

To carry out this analysis, a pre-processing step of the spectra must be previously applied. This step comprises the application of at least one of the following filters or transformations:

- a Savitzky-Golay filter, which enables the spectra to be smoothed and noise to be reduced. This filter is applied with suitable values of the parameters thereof (degree of the polynomial and "window width" or number of bands) according to the features of the spectral records provided by the hyperspectral camera used.
- a standard normal variate (SNV) which subtracts the average and divides by the standard deviation; and/or
- a correction of the base line.

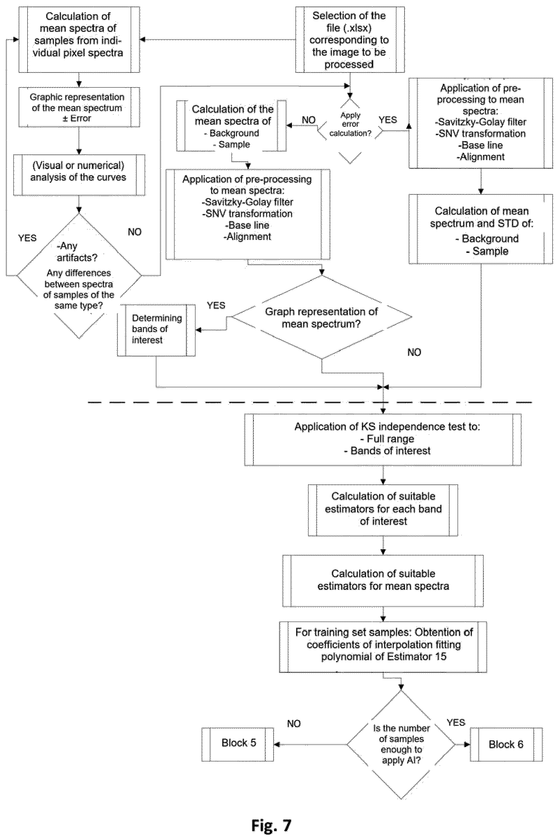

Next, a process of extraction and quantification of the features of the spectra is carried out, both of individual pixels and mean spectra, of samples of different fluids, different sizes and different concentrations of viruses. This process is carried out both in the event of known samples, that is, in the training, validation and test sets, and in the event of problem samples and is reflected in Figure 7.

If margins of error on the determinations of the estimators are to be calculated, it is necessary to apply the pre-processing step to the individual spectra of each pixel and, subsequently, calculate the corresponding mean values (for example, for a region of interest). If the aforementioned errors are not to be calculated, the mean spectra of the individual pixels can be calculated (from the un-preprocessed values thereof) and, next, the pre-processing steps are applied to the mean spectra.

First, in this process, the file or files containing the individual spectra of the pixels of the droplets are loaded.

Also, optionally, the analysed spectra can be aligned in previously specified ranges, the following alignment procedure is followed for them:

- validating that the specified ranges are within the spectra;
- verifying that the spectra are discretised with the same wavelengths;
- generating a "colour map" type image of the spectra in each range, wherein each spectrum corresponds to a horizontal line of pixels, generating a "colour map number 1";
- normalising the spectra with respect to the maximum value of all of them for each one of the ranges and display them in a new colour map for each range, the "colour map number 2";
- aligning the normalised spectra in each range and representing the result obtained on a colour map for each range, the "colour map number 3"; and
- inserting the spectra aligned in each one of the ranges in the matrix containing the original spectra, so that in the wavelength bands that do not belong to any of the ranges in which the alignment has been applied, the original spectra are maintained.

Next, the mean spectrum and the standard deviation (STD) thereof are calculated from said individual spectra. Then, graphs of the mean spectrum are generated with a margin of error ($\pm$Error), which is equal to the standard deviation multiplied by a previously determined coefficient (No), for visualising and determining the validity of the sample.

Next, the features of the spectra are extracted and quantified by calculating a set of quantifying parameters of the physical and mathematical features of the numerical functions constituted by the spectra in a certain band or spectral range. These parameters quantifying the features of the spectra or "estimators" can be calculated

- both in the full spectral range and in one or more "bands of interest" (BOI) thereof (each BOI is defined by the wavelength range it comprises), and
- for the spectra of each individual pixel or for the mean spectra corresponding to a set of the same or to a specific region or area of interest of the analysed samples.

Optionally, an independence test can be applied (e.g., of the Kolmogorov-Smirnov, K-S, type) to evaluate the similarity between mean or individual spectra.

When known diagnosis samples are processed, the calculation of the interpolation fitting polynomials of the values of the estimators E11, E13, E14, E17, E18, E19, E20 and E21 versus the concentration of the analysed samples (for each type of fluid and instant of time analysed) is performed. When unknown samples or "problem samples" are processed, these polynomials are used to quantify the concentration (viral load) of each pixel in the sample from the corresponding values of these estimators obtained from the spectrum of the pixel to be analysed.

In the event that known diagnosis samples are processed (i.e., belonging to the so-called "training" sets), bands of interest can be determined in the case that they have not been previously determined.

The bands of interest (BOI) for the analysis of detection and quantification of virus concentration are defined by the wavelength ranges in Tables 1, 2 and 3.

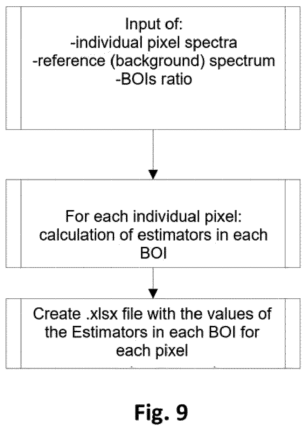

Once the bands of interest have been determined, the estimators are calculated in each band of interest as shown in Figure 9.

The specific bands of interest (BOI, ranges in nm) for detecting lentiviruses and synthetics in PBS and in artificial saliva are shown in Table 1.

The specific bands of interest (BOI, ranges in nm) for detecting synthetic coronaviruses in PBS and in artificial saliva are shown in Table 2.

The specific bands of interest (BOI, ranges in nm) for detecting coronavirus SARS-CoV-2 in nasopharyngeal discharge in inactivation medium (of guanidinium salt type) and in natural saliva are shown in Table 3.

Table 1.

| Specific BOI for detecting synthetic lentiviruses in PBS (nm) | | Specific BOI for detecting synthetic lentiviruses in artificial saliva (nm) | |
|---|---|---|---|
| Range 1 | 407-997 | Range 1 | 407-997 |
| Range 2 | 415-450 | Range 2 | 415-450 |
| Range 3 | 425-440 | Range 3 | 425-440 |
| Range 4 | 480-510 | Range 4 | 434-483 |
| Range 5 | 480-580 | Range 5 | 434-610 |
| Range 6 | 483-610 | Range 6 | 480-510 |
| Range 7 | 510-600 | Range 7 | 480-580 |
| Range 8 | 525-560 | Range 8 | 510-600 |
| Range 9 | 547-580 | Range 9 | 525-560 |
| Range 10 | 600-616 | Range 10 | 600-616 |
| Range 11 | 700-900 | Range 11 | 700-800 |
| | | Range 12 | 700-900 |

Table 2.

| Specific BOI for detecting synthetic coronaviruses in PBS (nm) | | Specific BOI for detecting synthetic coronaviruses in artificial saliva (nm) | |
|---|---|---|---|
| Range 1 | 407-997 | Range 1 | 407-997 |
| Range 2 | 434-483 | Range 2 | 434-483 |
| Range 3 | 480-580 | Range 3 | 434-610 |
| Range 4 | 547-580 | Range 4 | 480-580 |
| Range 5 | 700-800 | Range 5 | 700-800 |

Table 3.

| Specific BOI for detecting coronavirus SARS-CoV-2 in nasopharyngeal discharge in inactivation medium (nm) | | Specific BOI for detecting coronavirus SARS-CoV-2 in natural saliva (nm) | |
|---|---|---|---|
| Range 1 | 407-997 | Range 1 | 407-997 |
| Range 2 | 483-610 | Range 2 | 407-470 |
| Range 3 | 540-550 | Range 3 | 407-496 |
| Range 4 | 600-700 | Range 4 | 520-560 |
| Range 5 | 625-900 | Range 5 | 550-580 |
| Range 6 | 700-800 | Range 6 | 600-700 |
| Range 7 | 800-900 | Range 7 | 610-742 |
| Range 8 | 800-900 | Range 8 | 625-800 |
| Range 9 | 945-990 | | |

The defined estimators (E1 to E21) and the outputs that each one provides are detailed below.

These estimators are applied to one or more functions (also called "spectra" or "curves") defined in one same interval or range. The functional form of the functions is, generically, y = y(x), and each one is expressed as a set of pairs of numerical values (xi, yi). On a two-dimensional graph, for each function these values are xi = coordinates on the abscissa axis (horizontal axis), and yi = coordinates on the ordinate axis (vertical axis).

For each estimator, the inputs it requires and the outputs it provides are indicated. These can be both numerical and classification variables on qualitative scales.

| Expressions | Meaning | Formula |
|---|---|---|
| N | Total number of points that make up a function (in the interval considered). | Whole number. |
| x | Abscissa axis (horizontal). | Real number. |
| [x1, x2] | Interval (range, band) of the x-axis considered. | $x \in [x_1, x_2]$ |
| i | Representative index of the points that make up a function (spectrum or curve) in the interval considered. | i = 1 ... N |
| y | Function (curve) corresponding to a spectrum (in the interval considered). | $y = \{(x_i, y_i)\}_{i=1}^{N}$ |
| $y_{ref}$, yref | Function (curve) corresponding to a reference spectrum (in the interval considered). By default, it is the spectrum of the surface on which the samples are deposited (background, BG). | $y = \{(x_i, y_{ref,i})\}_{i=1}^{N}$ |
| $A_Y$, Ay | Area comprised between the function "y" and the abscissa axis (x) in the interval considered. | $A_y = \sum_{i=1}^{N} y_i \cdot \Delta x_i$ |
| $A_{y\ ref}$, Aref | Area comprised between the reference function and the abscissa axis (x) in the interval considered. | $A_{ref} = \sum_{i=1}^{N} y_{ref} \cdot \Delta x_i$ |
| $\langle y \rangle$ | Mean value of the function "y" in the interval considered. | $\langle y \rangle = \dfrac{\sum_{i=1}^{N} y_i}{N}$ |
| P | Enhancement parameter (real number) | P >= 1. By default, P = 1 |

**Estimator 1: Amplitude Estimator.** Given a curve (spectrum), it classifies it into five levels of amplitude by comparing it with the line formed by the start and end points of the spectrum in the analysed spectral range. To this end, the position and value of the relative minimum (or absolute minimum, if there is no relative minimum) of the curve and the value of the ordinate of the line previously defined at the same position on the abscissa axis are determined. From both ordinate values, the difference between the two is obtained, the absolute value thereof and the ratio (quotient) between this value and the value of the ordinate of the curve expressed as a percentage. With this last parameter, it classifies the amplitude of the curve into five levels: very low (≤10%), low (≤50%), average (≤75%), high (≤100%), and very high (>100%).

**Inputs:** x = abscissa axis, y = curve (spectrum).
**Outputs (5):**

Estimator 1.a: Quotient between the estimated value of the line (linking the start and end points of the spectrum in the interval) at the abscissa point corresponding to the relative minimum of the spectrum and the value thereof.
Estimator 1.b: Difference between the estimated value of the line (linking the start and end points of the spectrum in the interval) at the abscissa point corresponding to the relative minimum of the spectrum and the value thereof.
Estimator 1.c: Absolute value of 1.b.
Estimator 1.d: Quotient (expressed as a percentage) between the value 1.c and the difference between the maximum and minimum values of the curve (spectrum) in the interval.
Estimator 1.e: Classification value into 5 levels of amplitude with 1 being very low, 2 low, 3 average, 4 high and 5 very high.

**Estimator 2: Curvature Estimator.** It evaluates the curvature of a curve (spectrum) by calculating the ratio (quotient) between 1) the length of the curve measured along the same, 2) the length thereof measured along an interpolating polynomial of degree defined by the user (10 by default), and 3) the length of the line defined by the start and end points of the spectrum in the range.

To this end, the referred lengths of the curve (spectrum), the interpolating polynomial thereof of the indicated degree and the line defined by the end points of the spectrum using the length estimator (E5) are obtained. Likewise, the level of oscillations is obtained by means of the oscillation estimator (E6). Based on these values, the ratio of lengths with the curve or with the interpolating polynomial is calculated. In addition, it returns a variable informing of the method used and another one indicating the presence of some local minimum.

>    **Inputs:** x = abscissa axis, y = curve (spectrum).
>    **Outputs (3):**

>    Estimator 2.a: Quotient between the value of the length of the curve (spectrum) in the interval (5.b) and the distance along the line defined by the start and end points of the spectrum in the interval (5.a). It can also be the quotient between the value of the length of the interpolation polynomial in the interval (5.c) and the line defined by the start and end points of the spectrum in the interval (5.a). The choice of the value provided will be based on the value of the quotient between the estimators 5.b and 5.c: if this quotient is equal to or greater than 50%, the value of the estimator 5.b is generated as an output.
>    Estimator 2.b: It indicates whether there is a relative minimum in the interval.
>    Estimator 2.c: It indicates the use of the estimator 5.b or 5.c for obtaining 2.a.

**Estimator 3: Compression Estimator.** It classifies a curve (spectrum) according to the compression level thereof on the ordinate axis, on the abscissa axis, and on both jointly. It receives as input a curve (spectrum) in which there must be a relative (local) maximum and minimum. The compression on each one of the axes is calculated as the ratio (quotient) between the difference of the coordinates of the maximum and the minimum, and the difference between the coordinates of the start and end point of the range indicated. This calculation is performed for each axis expressing the value in percentage and is classified into four levels: low (<25%), average (<50 %), high (<75 %), and very high (≥75%). The joint compression of both axes is classified into four levels according to the two already calculated: low (compression of both axes <50%), average (compression of the abscissa axis <50% and compression of the ordinate axis ≥50%), high (compression of the abscissa axis ≥50 % and compression of the ordinate axis <50 %), and very high (compression of both axes ≥50%). In addition to these classifications, the type of curve is indicated depending on whether the relative minimum or maximum appears first, and the symmetry of the curve is evaluated by calculating the ratio between the areas of the relative maximum and minimum.

>    **Inputs:** x = abscissa axis, y = curve (spectrum).
>    **Outputs (5):**

>    Estimator 3.a: Numerical value depending on the type of curvature of the interval (1 = concave and 2 = convex).
>    Estimator 3.b: Classification value in 4 levels of the compression of the curve according to the direction of the x-axis. 1 being low, 2 average, 3 high and 4 very high.
>    Estimator 3.c: Classification value in 4 levels of the compression of the curve according to the direction of the y-axis. 1 being low, 2 average, 3 high and 4 very high.
>    Estimator 3.d: Classification value in 4 levels of the compression of the curve according to the values of the estimators 3.b and 3.c. 1 being low, 2 average, 3 high and 4 very high.
>    Estimator 3.e: Value for the quantification of the symmetry of the curve. 0 being totally asymmetric and 1 totally symmetric with respect to the midpoint of the interval.

**Estimator 4: Kurtosis Estimator.** It evaluates the shape of the distribution of the values of the curve (spectrum) by calculating the statistical variable called kurtosis. It is calculated as a ratio between the fourth centred moment and the standard deviation. Likewise, the curve (spectrum) is classified into three levels according to the similarity thereof to the shape of a normal distribution in the same spectral range analysed: mesokurtic (similar to the normal distribution), leptokurtic (more pointed than the normal distribution) and platykurtic (more flattened than the normal distribution).

>    **Inputs:** x = abscissa axis, y = curve (spectrum).
>    **Outputs (2):**

>    Estimator 4.a: Quantitative value of kurtosis.

Estimator 4.b: Classification value in 3 levels. Wherein 1 = mesokurtic, 2 = leptokurtic and 3 = platykurtic.

**Estimator 5: Length Estimator.** It evaluates the length of a curve (spectrum) in the defined interval using three methods: calculating the length of the line formed by the start and end points of the curve (spectrum) in the interval; adding (point to point) the length of the curve (spectrum) along the same; and adding (point to point) the length of the interpolating polynomial of the degree indicated (10 by default).

**Inputs:** x = abscissa axis, y = curve (spectrum).
**Outputs (3):**

Estimator 5.a: Value of the distance between the start and end points of the curve in the interval.
Estimator 5.b: Value of the length of the curve in the interval.
Estimator 5.c: Value of the length of the interpolation polynomial in the interval.

**Estimator 6: Oscillation Estimator.** It classifies a function (spectrum) according to the level of oscillations (that is, alternate local maxima and minima) that it exhibits (on the vertical axis). To do this, the length of the curve (spectrum) is compared with that of an interpolating polynomial of the degree indicated (10 by default). The lengths of both functions are obtained using the length estimator (E5) and the ratio (quotient) between both of them is calculated, expressed as a percentage. This value is classified into five levels: very low (≤10%), low (≤50%), average (≤75%), high (≤100%), and very high (>100%).

**Inputs:** x = abscissa axis, y = curve (spectrum).
**Outputs (2):**

Estimator 6.a: Quotient (expressed as %) between the estimators 5.b and 5.c.
Estimator 6.b: Classification value in 5 levels wherein 1 = low, 2 = low, 3 = average, 4 = high and 5 = very high.

**Estimator 7: Horizontality (plateau) estimator.** It evaluates and classifies the slope of the line of best fit of a curve (spectrum) in an interval. To this end, the line of best fit is calculated by obtaining the slope and the ordinate at the origin. The slope is transformed into an angle with the abscissa axis and is expressed in degrees and in absolute value. According to the slope, the horizontality (plateau nature) of the curve in the interval is classified into 4 levels: high (<20°), average (<45°), low (<60°), and very low (≥60°). The same values, in reverse order, characterise the slope of the referred line in the interval.

**Inputs:** x = abscissa axis, y = curve (spectrum).
**Outputs (4):**

Estimator 7.a: Slope in degrees of the line of best fit of the curve in the interval.
Estimator 7.b: Slope in absolute value of the line of best fit of the curve in the interval.
Estimator 7.c: Ordinate at the origin of the line of best fit of the curve in the interval.
Estimator 7.d: Classification value in 4 levels according to the value of the estimator 7.c in absolute value. Wherein 1 = high, 2 = average, 3 = low and 4 = very low.

**Estimator 8: Area of the triangle according to Heron's formula.** It evaluates the area between a curve (spectrum) and the horizontal axis using the formula for the area of the triangle formed by three given points according to Heron's formula. The points considered are the start and end points of the interval, and the midpoint between the two, having the corresponding values of the spectrum as ordinates in each one of them.

**Inputs:** x = abscissa axis, y = curve (spectrum).
**Outputs (1):**
Estimator 8.a. Area of the triangle according to Heron's formula.

**Estimator 9: Estimator of Angle between Vectors.** It evaluates the angle formed between two vectors (lines) or between a vector (line) and the horizontal as indicated by the input parameters (if only a line 1 is introduced as input, the angle with respect to the horizontal is calculated). The calculated angle is returned in degrees. It can be applied to calculate the angle formed by the line of fit of a spectrum with respect to the line of fit of another spectrum (for example, with respect to the reference spectrum).

**Inputs:** x = abscissa axis, y1 = line 1, y2 = line 2 (optional).
**Outputs (1):**
Estimator 9.a. Angle between vectors (lines).

**Estimator 10: Upper Curve Estimator.** Given two functions (spectra or curves) in an interval, it evaluates which is the greatest. To this end, the percentage of the interval in which each curve (spectrum) is higher is calculated and it indicates which one of them is the higher curve in the highest percentage and the value of this percentage. It can be applied to determine whether one spectrum is higher than another one (for example, than the reference spectrum) in the interval considered.

**Inputs:** x = abscissa axis, y1 = spectrum 1, y2 = spectrum 2.
**Outputs (2):**

Estimator 10.a: Indicator of which one of the curves is located above in the highest percentage in the interval. If it is 50%, it will return the value 0.
Estimator 10.b: Fraction of the interval (expressed as a percentage) in which the curve indicated by the estimator 10.a is higher than the other one.

**Estimator 11: Area estimator.** It calculates (by numerical integration) the area comprised between the given function (spectrum) and the abscissa axis, and the area comprised by the reference spectrum and the abscissa axis. From both values, 1) the relative value (quotient) between the area of the given curve (spectrum) and the area of the reference curve (spectrum) are calculated, and 2) the relative difference of both (with respect to the reference).
**Inputs:** x = abscissa axis, y = function (spectrum), $y_{ref}$ = reference function (spectrum).
**Outputs (2):**
Estimator 11.a: Quotient between the area of the given curve (spectrum) and the area of the reference curve (spectrum).
Estimator 11.b: Relative area of the given curve (spectrum) with respect to the area of the reference curve (spectrum).

| Estimator E11 | Formula |
|---|---|
| E11a | $A_y$ |
| E11b | $\dfrac{A_y - A_{y_{ref}}}{< y_{ref} >}$ |

**Estimator 12: Slope Change Estimator.** Given a curve (spectrum) in an interval, and a point thereof at which a possible change in slope is to be evaluated, the slope of the line of best fit in each area of the interval (subintervals before and after the referred point) is obtained by means of the horizontality estimator (E7) and the quotient between both slopes is calculated (as a quotient between the slope in the second section and between the slope in the first). According to the sign of this quotient, it is indicated whether there is a change in slope or not.

**Inputs:** x = abscissa axis, y1 = spectrum 1, xp = coordinate on the horizontal axis of the point at which the change in slope is to be evaluated.
**Outputs (2):**

Estimator 12.a: Value of the quotient between the slopes of the lines of best fit of the curve in each one of the subintervals into which the initial interval is divided (with respect to the entered point).
Estimator 12.b: Binary classification value for evaluating the change of sign of the slope of both lines at the entered point. 0 = there is no change of sign and 1 = there is a change of sign.

**Estimator 13: Estimator of relative mean difference between functions.** Given a function (spectrum) and a reference function (spectrum), it calculates 1) the mean value of the difference thereof, expressed relative to the mean value of the reference spectrum, and 2) the difference between the mean value of the spectrum and the mean value of the reference spectrum, expressed relative to the mean value of the reference spectrum. The numerical values of both outputs can be enhanced by raising them to a certain exponent (P = enhancement parameter. By default, P = 1).
**Inputs:** x = abscissa axis, y = curve (spectrum), $y_{ref}$ = reference curve (spectrum), P = Enhancement parameter.
**Outputs (2):**

Estimator 13.a: Mean value of the difference between the function (spectrum) and the reference function (spectrum), expressed relative to the mean value of the reference spectrum.

Estimator 13.b: Difference between the mean value of the function (spectrum) and the mean value of the reference function (spectrum), expressed relative to the mean value of the reference spectrum.

| Estimator E13 | Formula |
|---|---|
| E13a | $$\left(\frac{<y - y_{ref}>}{<y_{ref}>}\right)^{P}$$ |
| E13b | $$\left(\frac{<y> - <y_{ref}>}{<y_{ref}>}\right)^{P}$$ |

**Estimator 14: Estimator of differences between functions and the areas thereof.** Given a function (spectrum) and a reference function (spectrum), it calculates 1) the mean value of the difference thereof, squared and expressed relative to the value of the area comprised between the reference spectrum and the abscissa axis, and 2) the difference between the values of the area comprised between the function and the abscissa axis and the reference spectrum and the abscissa axis, expressed relative to the mean value of the reference spectrum squared. The numerical values of both outputs can be enhanced by raising them to a certain exponent (P = enhancement parameter. By default, P = 1).

**Inputs:** x = abscissa axis, y = curve (spectrum), $y_{ref}$ = reference curve (spectrum), P = Enhancement parameter.

**Outputs (2):**

Estimator 14.a: Mean value of the difference between the function (spectrum) and the reference spectrum, squared and expressed relative to the value of the area comprised between the reference spectrum and the abscissa axis.

Estimator 14.b: Difference between the values of the area comprised between the function and the abscissa axis and the reference spectrum and the abscissa axis, expressed relative to the mean value of the reference spectrum squared.

| Estimator E14 | Formula |
|---|---|
| E14a | $$\left(\frac{<y - y_{ref}>^2}{A_{ref}}\right)^{P}$$ |
| E14b | $$\left(\frac{A_y - A_{ref}}{<y_{ref}>^2}\right)^{P}$$ |

**Estimator 15: Estimator of local maxima.** It calculates the number of local maxima of a function (spectrum) in an interval.

**Inputs:** x = abscissa axis, y = function (spectrum),

**Outputs (1):**

Estimator 15.a: Number of local (relative) maxima existing in the given interval.

**Estimator 16: Estimator of local minima.** It calculates the number of local minima of a function (spectrum) in an interval.

**Inputs:** x = abscissa axis, y = function (spectrum),

**Outputs (1):**

Estimator 16.a: Number of local (relative) minima existing in the given interval.

**Estimator 17: Estimator of square difference between functions.** Given a function (spectrum) and a reference function (spectrum), it calculates 1) the difference between the mean values thereof, squared and expressed relative to the value of the area comprised between the reference spectrum and the abscissa axis, and 2) the difference between the mean values thereof, squared and expressed relative to the difference between the areas comprised by the spectrum and by the reference spectrum and the abscissa axis. The numerical values of both outputs can be enhanced by raising them to a certain exponent (P = enhancement parameter. By default, P = 1).

**Inputs:** x = abscissa axis, y = curve (spectrum), $y_{ref}$ = reference curve (spectrum), P = Enhancement parameter.

**Outputs (2):**

Estimator 17.a: Difference between the mean values of the function (spectrum) and the reference spectrum, squared and expressed relative to the value of the area comprised between the reference spectrum and the abscissa axis.

Estimator 17.b: Difference between the mean values of the function (spectrum) and the reference spectrum, squared and expressed relative to the difference between the areas comprised by the spectrum and by the reference spectrum and the abscissa axis.

| Estimator E17 | Formula |
|---|---|
| E17a | $$\left(\frac{(<y>-<y_{ref}>)^2}{A_{ref}}\right)^P$$ |
| E17b | $$\left(\frac{(<y>-<y_{ref}>)^2}{A_y-A_{ref}}\right)^P$$ |

**Estimator 18: Estimator of square difference of mean values of functions.** Given a function (spectrum) and a reference function (spectrum), it calculates 1) the difference between the squared mean values thereof, expressed relative to the value of the area comprised between the reference spectrum and the abscissa axis, and 2) the difference between the squared mean values thereof, expressed relative to the difference between the areas comprised by the spectrum and by the reference spectrum and the abscissa axis.

The numerical values of both outputs can be enhanced by raising them to a certain exponent (P = enhancement parameter. By default, P = 1).

**Inputs:** x = abscissa axis, y = curve (spectrum), $y_{ref}$ = reference curve (spectrum), P = Enhancement parameter.

**Outputs (2):**

Estimator 18.a: Difference between the mean square values of the function and the reference spectrum, expressed relative to the value of the area comprised between the reference spectrum and the abscissa axis.

Estimator 18.b: Difference between the mean square values of the function and the reference spectrum, expressed relative to the difference between the areas comprised by the spectrum and by the reference spectrum and the abscissa axis

| Estimator E18 | Formula |
|---|---|
| E18a | $$\left(\frac{<y>^2-<y_{ref}>^2}{A_{ref}}\right)^P$$ |
| E18b | $$\left(\frac{<y>^2-<y_{ref}>^2}{A_y-A_{ref}}\right)^P$$ |

**Estimator 19: Enhanced area estimator.** It calculates (by numerical integration) the area comprised between the given function (spectrum) and the abscissa axis, and the area comprised by the reference spectrum and the abscissa axis. From both values, 1) the relative value (quotient) between the area of the given curve (spectrum) and the area of the reference curve (spectrum) are calculated, and 2) the relative difference of both (with respect to the reference). The numerical values of both outputs can be enhanced by raising them to a certain exponent (P = enhancement parameter. By default, P = 1).

**Inputs:** x = abscissa axis, y = function (spectrum), $y_{ref}$ = reference function (spectrum), P = Enhancement parameter.

**Outputs (2):**

Estimator 19.a: Quotient between the area of the given curve (spectrum) and the area of the reference curve (spectrum).

Estimator 19.b: Relative area of the given curve (spectrum) with respect to the area of the reference curve (spectrum).

| Estimator E19 | Formula |
|---|---|
| E19a | $$\left(\frac{A_y}{A_{y_{ref}}}\right)^P$$ |
| E19b | $$\left(\frac{A_y - A_{y_{ref}}}{A_{y_{ref}}}\right)^P$$ |

**Estimator 20: Estimator of relative difference between functions.** Given a function (spectrum) and a reference function (spectrum), it calculates 1) the mean value of the relative difference thereof (at each point of the interval), and 2) the mean value of the relative square difference thereof (at each point of the interval). The numerical values of both outputs can be enhanced by raising them to a certain exponent (P = enhancement parameter. By default, P = 1).
**Inputs:** x = abscissa axis, y = function (spectrum), $y_{ref}$ = reference function (spectrum).
**Outputs (2):**

| Estimator E20 | Formula |
|---|---|
| E20a | $$\left(\frac{1}{N}\sum_{i=1}^{N}\left(\frac{y_i - y_{ref}}{y_i + y_{ref}}\right)\right)^P$$ |
| E20b | $$\left(\sqrt{\frac{1}{N}\sum_{i=1}^{N}\left(\frac{y_i - y_{ref}}{y_i + y_{ref}}\right)^2}\right)^P$$ |

**Estimator 21: Estimator of relative mean square difference between functions.** Given a function (spectrum) and a reference function (spectrum), it calculates 1) the mean square value of the difference thereof (at each point of the interval), expressed relative to the mean value of the reference, and 2) the mean square value of the difference thereof (at each point of the interval), expressed relative to the sum of the mean value of the function and the reference. The numerical values of both outputs can be enhanced by raising them to a certain exponent (P = enhancement parameter. By default, P = 1).
**Inputs:** x = abscissa axis, y = function (spectrum), $y_{ref}$ = reference function (spectrum).
**Outputs (2):**

| Estimator E21 | Formula |
|---|---|
| E21a | $$\left(\frac{\sqrt{\frac{1}{N}\sum_{i=1}^{N}(y - y_{ref})^2}}{<y_{ref}>}\right)^P$$ |
| E21b | $$\left(\frac{<y - y_{ref}>}{<y> + <y_{ref}>}\right)^P$$ |

Moreover, to determine the concentration of a sample (in which it is known that there is virus or culture medium but in a certain unknown concentration) from the spectrum thereof, it is required to have previously obtained, by means of a suitable set of training samples, (at least one of) the fitting polynomials (linear by default) that relate the values of the Estimators E11, E13, E14, E17, E18, E19, E20 and E21 with the concentrations of the same type of virus or culture medium in the same type of fluid and in the same state of the sample (liquid droplet or dry residue).

The aforementioned fitting polynomials are obtained by processing the spectra of the samples belonging to the training set of each type of virus, in different concentrations, in each type of fluid, and for each state (liquid droplet or dry residue) of the samples.

The process for obtaining the fitting polynomials (from the set of training samples) consists of the following steps:

1. For each type of virus, fluid type and sample state: A horizontal axis is constructed in which the values of the available concentrations of the training samples (called "xC") are represented.

2. From the spectra of each one of the pixels of each sample (for each type of virus, type of fluid and sample state (liquid droplet and dry residue)), the values are calculated for each one of the estimators indicated (E11, E13, E14, E17, E18, E19, E20 and E21).

3. For each one of these estimators,

- a statistical analysis of the values obtained from the estimator is performed for each concentration (for each type of virus, type of fluid and sample state (liquid droplet and dry residue). This analysis comprises determining the mean, standard deviation, median, 25th and 75th percentiles thereof and possible outliers. Optionally, a graphical representation of the "boxplot" type and the mean plus/minus the standard deviation is performed.
- excluding outliers, a new statistical analysis of the values of the estimator is performed to determine the mean and standard deviation thereof.
- a polynomial fitting is performed (grade 1 by default, in other words, linear fit) of the mean values of the estimator (not including outliers) versus the concentration. The fit enables these fitting polynomials to be expressed as

$$y_{Ei} = \sum_{k=1}^{N_p} p_k \cdot x_C$$

Wherein "xC" is the concentration (in concentration units, typically, in copies per millilitre) and "yEi" is the value of the Estimator (Ei) considered, and pk (k = 1... Nk) are the coefficients of the corresponding polynomial.
In the linear case (Nk = 2), the fitting polynomials (lines) are expressed as

$$y_{Ei} = p_1 x_C + p_2$$

The calculation of the fitting polynomial includes the determination of the parameters that quantify the goodness of fit. By default, the usual coefficients "r2" and "r2-fitted" that quantify the goodness of fit in the sense of least squares are calculated.
Optionally, for each estimator (and for each type of virus, type of fluid and sample state (liquid droplet and dry residue)), a graphical representation is performed showing the mean values plus/minus the standard deviation (excluding outliers) and the fitting polynomial calculated.

The process of determining the concentration of a problem sample consists of the following steps:

1. The fitting polynomial corresponding to the same type of virus or culture medium, fluid and sample state (liquid droplet or dry residue) must be available.
2. For each pixel of the (hyperspectral image of the problem sample), at least one of the indicated estimators is calculated (Ei, wherein i = 11, 13, 14, 17, 18, 19, 20, and 21).
2. For each one of the indicated estimators,

- the mean value (Ei, m) thereof is obtained from the values thereof for each of the pixels in the sample.
- the corresponding fitting polynomial is inverted (linear by default, defined by the coefficients p1 and p2). To this end, calling the referred mean value of the estimator of the "problem sample" "ym"

$$y_m = E_{i,m}$$

the corresponding concentration (Xc, m) is obtained as:

$$x_{C,m} = x_m = \frac{y_m - p_2}{p_1}$$

In addition, if a sufficiently large set of training samples were available, different combinations of values of the indicated estimators and decision rules could be constructed (for example, by means of thresholds, classification trees and other statistical methods or based on artificial intelligence algorithms) that enable a problem sample to be classified as positive (presence of virus) or negative (absence of virus) or with presence or absence of culture medium.

Two methods can be used to classify a sample as positive or negative:

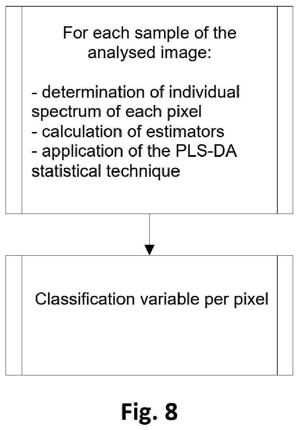

- as shown in Figure 8, advanced statistical methods of the partial least squares discriminant analysis (PLS-DA) type. To this end, using the full spectrum of all the pixels that make up the known diagnosis samples, a PLS-DA model is calculated with a number of latent variables such that it covers at least 95% of the variance of the values of the pixels of the samples. This model provides as output a continuous classification variable comprised between 0 (absence of virus) and 1 (presence of virus). Next, by evaluating the classification results provided by the model for the analysis of known samples, the value of a classification threshold per pixel is determined such that if the value of the output variable for the spectrum of a given pixel is greater than the same then this pixel is considered positive (and negative otherwise).

To classify an unknown sample or "problem sample", the corresponding model is applied (according to the type of virus to be detected and the sample fluid) and the value of the classification variable of each pixel is obtained as a result, and with the application of the referred threshold, each pixel is classified as positive or negative.

- classification by creating, training and applying a neural network (if the number of available known diagnosis samples (samples available to construct the training, validation and test sets) is sufficient to apply artificial intelligence algorithms). To this end, first, the mean spectrum of the component pixels of the background (BG) is extracted to a file, and the individual spectra of each one of the components pixels of the known diagnosis samples are extracted to another file, one for each image. From the extracted spectra, the estimators (E1-E21) are calculated for the spectra of each individual pixel (or for the mean spectra of an ROI) in the previously defined bands of interest.

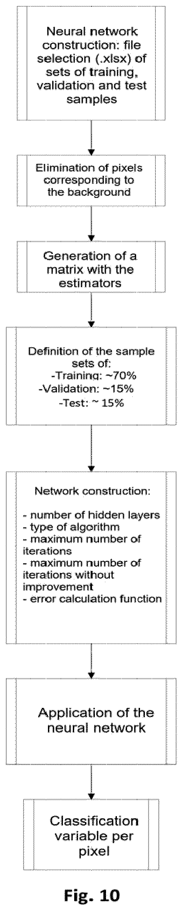

The generation of a neural network, shown in Figure 10, (for each fluid and sample state) requires three distinct and independent data sets or groups:

- Training set: This group is the one used for guided learning that trains the neural network.
- Validation set: This group serves to verify and optimise training. It determines the final state of the network (of the weights that interconnect the neurons) from among all those generated during training. This state will be the one used for diagnosis.
- Test (or testing) set: This group is used to evaluate the network when the training thereof is finished. As it is independent from the preceding ones, it enables verifying that there has been no "overfitting", in other words, it verifies that the network is capable of diagnosing correctly in cases other than those trained, but of the same nature.

For the generation of the neural networks corresponding to each fluid and each sample state (liquid droplets or dry residues), it is ensured that the numbers of pixels with positive and negative diagnoses are similar. Although the 50%-50% ratio is of interest, deviations of up to 10% are admissible in this ratio (60% -40% or vice versa).

The neural networks that are constructed are of the Pattern Recognition Network type. This type of network is trained to find patterns in the set of estimator values associated with each pixel, so that they can be individually classified as positive or negative.

Each network consists of a set of layers. The layers are made up of neurons linked together, wherein each link has a different weight. The inputs of the network are the different rows of the matrix that contains the values of the estimators calculated in the bands of interest, for each pixel. The output of the network corresponds to the diagnosis, which is a value comprised between 0 and 1, the diagnoses close to 1 being, in this case, those with the greatest probability of being positive. The neurons in the hidden layers are sigmoid responsive. Those corresponding to the first layer are directly attached to the inputs, the neurons of each subsequent layer are interconnected with all those of the preceding one, and the neuron of the final layer (output layer) produces the output of the network with softmax output neurons.

In this type of neural networks, the training phase is guided by the training pixel set. In the following phases (validation and test), the network does not vary depending on the results of the same. While the validation will serve to determine the state of the network that will finally be used for diagnosis, the test set is completely independent, and it is only used to evaluate the quality of the network. For each type of virus to be detected, each fluid and each sample state (liquid droplets and dry residues), deep learning neural networks with feed-forward structure are generated. These feed-forward networks are made up of a certain number of hidden layers (20 layers by default) and one output layer. Each hidden layer is made up of a number of neurons (Nc) defined by the product of the number of estimators applied (N1) to each band of interest by the number thereof (N2) so that the number of neurons per layer is Nc = N1*N2 and the total number of neurons in the network is Nn = Nc + 1.

For each type of virus, fluid and sample state, the corresponding network is trained until there is no improvement over the validation set after a certain number of consecutive iterations (400 iterations by default). The network configuration that is stored (for application thereof with other unknown samples) is the one that provides the best performance in the validation set. The performance of the network is evaluated using the mean square error (MSE) function.

Network training is optimised by evaluating, in every step of the same, the classification results provided in the validation set. In this way it is further confirmed that there is no "overfitting". In each step the classification results obtained in the test set are also evaluated, but this does not participate in the evolution of the network. The final neural network will be the one that provides the best results in the validation set.

For the construction of the training, validation and test sets from the images of known diagnosis samples, the pixels of the same are divided, depending on the network, by 66-70% for training, 15-17% for validation and 15-17% for test. This division is performed taking care that there are no pixels of one same sample in different groups, and that the test set includes pixels from images of samples obtained independently from the training ones.

When the algorithms of classification (statistical or by means of the neural network) are applied to each set of known diagnosis images, the corresponding confusion matrix and ROC curve of sensitivity versus specificity are obtained in the test sets and in the validation sets combined with the test set.

Both the statistical classification algorithms and the neural network generate an output variable (or classification variable) that scores the spectrum of each analysed pixel, granting it a probability by means of a numerical value comprised between 0 (absence of virus) and 1 (presence of virus).

For the classification of the individual pixels, a threshold value of the output variable is defined, called "classification threshold per pixel" (herein called "pixel threshold") and comprised between 0 and 1, which determines when the pixel goes from being considered negative to positive: if the value of the output or classification variable of an individual pixel is greater than the value of the referred threshold, then the pixel is considered positive, and otherwise, it is negative. The variation of this classification threshold per pixel produces changes in the number of pixels correctly evaluated and, therefore, changes in the sensitivity (SE) and specificity (SP) of the classification (per pixel) result. Values of the classification threshold per pixel close to 1 increase specificity, whereas values of this threshold close to 0 increase sensitivity. When one of these two quantities (SE or SP) increases, the other decreases. The ROC curves of sensitivity versus specificity are obtained by varying the threshold and calculating the corresponding values of SE and SP.

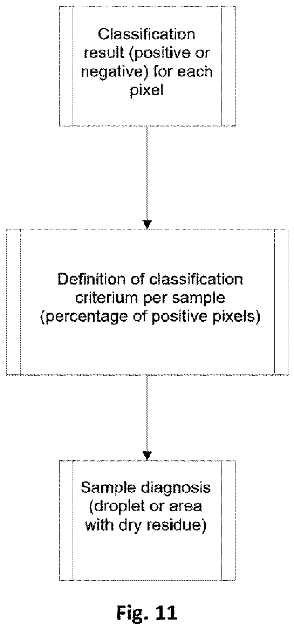

For the classification of a sample (liquid droplet or dry residue), as shown in Figure 11, made up of a certain number of individual pixels, the number of individual pixels of the same that have been classified as positive is counted, and the percentage that they represent with respect to the total number of component pixels of the sample is evaluated. A "classification threshold per sample" value is defined (herein called "sample threshold"), comprised between 0% and 100%, which determines when the sample goes from being considered negative to positive: if the percentage of positive pixels in the sample is greater than the value of the referred threshold, then the sample is considered positive and, otherwise, negative. The variation of this classification threshold per sample produces changes in the number of the same that are correctly evaluated and, therefore, changes in the sensitivity (SE) and specificity (SP) of the classification (per sample) result.

From the classification per pixel and per sample results of the known diagnosis images (training, validation and test sets), the combination of the same that optimises the classification results is determined. These values are those that are applied for the analysis of unknown samples ("problem samples") by means of statistical classification algorithms or artificial intelligence algorithms.

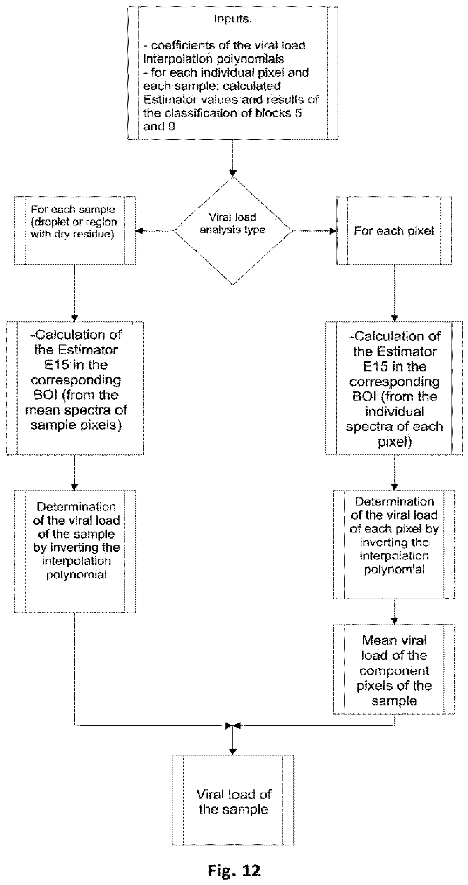

When a pixel or sample has been classified as positive, the viral load thereof is quantified, as shown in Figure 12. To do this, the value of the estimators E11, E13, E14, E17, E18, E19, E20 and E21 is calculated and the viral load is calculated using the corresponding linear fitting polynomials corresponding to the type of virus, medium (fluid) of the sample and state thereof (liquid droplet or dry residue). The coefficients of these polynomials have been determined by processing known diagnosis samples.

**Claims**

1. A method for detecting and quantifying viruses in samples in the form of liquid droplets or dry residues deposited on a support surface, by means of the digital processing of hyperspectral images of diffuse optical reflectance obtained in the visible and infrared ranges, which comprises the steps of:

   - smart extraction of pixels corresponding to the samples, by segmentation of the same with a principal component analysis (PCA), with at least 2 components, to differentiate pixels belonging to the samples from pixels belonging to the support surface on which they are deposited,
   - extracting the spectrum of each pixel and labelling depending on whether they belong to the samples, or regions of interest (ROI), or to the support surface, or background (BG);
   - delimiting the contour of the samples in the hyperspectral image;
   - generating a file that contains the spectra of all the pixels belonging to the samples;
   - calculating the mean spectrum and standard deviation (STD) of the set of pixels that make up the image from the individual spectra of each pixel corresponding to an area or region of interest;
   - aligning the analysed spectra in previously specified ranges, by means of an alignment method comprising:

     ◦ validating that the specified ranges are within the spectra;
     ◦ checking that the spectra are discretised with the same wavelengths;
     ◦ generating a "colour map" type image of the spectra in each range, wherein each spectrum corresponds to a horizontal line of pixels, generating a "colour map number 1";
     ◦ normalising the spectra with respect to the maximum value of all of them for each one of the ranges and display them in a new colour map for each range, the "colour map number 2";
     ◦ aligning the normalised spectra in each range and representing the result obtained on a colour map for each range, the "colour map number 3";
     ◦ inserting the aligned spectra in each of the ranges in the file containing the original spectra, so that in the wavelength bands that do not belong to any of the ranges in which the alignment has been applied, the original spectra are maintained;

   - extracting and quantifying the features of the spectra, in the individual spectra and/or in the mean spectra, by calculating estimators and interpolation fitting polynomials in a plurality of bands of interest in the spectra;
   - classifying each individual pixel as positive or negative based on the classification variable provided by:

     ◦ the partial least squares discriminant analysis method (PLS-DA),
     ◦ artificial intelligence (AI) algorithms applied to the estimators calculated in the bands of interest, and

   - classifying each sample as positive or negative by determining the percentage of individual component pixels thereof that are positive and comparing them with a classification threshold.

2. The method according to claim 1, comprising a prior step of sample preparation to obtain hyperspectral images, comprising:

   - establishing standard environmental conditions, with a temperature in the range of 18°C to 25°C, a relative humidity in the range of 40% to 60%, and a pressure of 1 atmosphere;
   - arranging the fluids to be analysed in containers;
   - extracting sample droplets from fluids,
   - depositing the droplets in the form of a "mosaic" arranged in rows and columns on the support surface;
   - depositing the support surface on a "sample holder" part and the "sample holder" part, in turn, within the visual field captured by a sensitive hyperspectral camera in the visible and near infrared ranges.

3. The method according to any of claims 1 to 2, comprising a prior step of obtaining calibration patterns for hyperspectral images comprising:

   - obtaining a "white reference image" by recording a white reference surface adjusting the exposure to prevent saturation of the signal; and
   - obtaining a "black reference image", recording an image without energy entering through the lens to determine the effect of background noise.

4. The method according to any of claims 1 to 3, comprising a drying step by exposing the samples in the form of liquid droplets to irradiation, forming a dry residue on the support surface.

5. The method according to any of claims 1 to 4, comprising a step of obtaining hyperspectral images at regular intervals, obtaining:

- an image at an instant T0, immediately after depositing the samples, which are in the state of liquid droplets;
- an image at an instant T5, at least 5 minutes after depositing the samples, under illumination irradiation, the samples are in a partially dry state; and
- an image at the instant T10, at least 10 minutes after depositing the samples under illumination irradiation, the samples are in dry residue state.

6. The method according to any of claims 1 to 5, comprising a step of calibration and pre-processing of hyperspectral images, applying at least one of the following operations:

- black and white calibration, calculating the relative reflectance, using the formula

$$R = (I - D) / (W - D)$$

wherein R is the corrected image, I is the uncorrected image, W is the white calibration image and D is the black calibration image;
- application of an offset (Ao), or a value to add to the reflectance signal to eliminate possible problems with the transformation (null value):

$$Ao = |I - D|$$

$$A1 = R + Ao$$

- conversion from reflectance to pseudo-absorbance using the formula:

$$A2 = \log_{10}(1 / A1)$$

wherein A2 is a pseudo-absorbance image;
- an application of a rotation to correct possible effects of rotation of the sensor or of orientation of the image; or
- application of a cut-out to eliminate peripheral areas and reduce the processing load, defining a region of interest in the image to be processed (ROI).

7. The method according to any of claims 1 to 6, wherein the smart pixel extraction step comprises a step of representing the pixels belonging to the samples on a false colour scale to verify that the labelling is correct.

8. The method according to any of claims 1 to 7, further comprising a step of selecting the suitable pixels for the analysis, by means of a second PCA analysis with at least 2 components, identifying pixels corresponding to inhomogeneities inside the droplets, such that a label is generated which identifies the valid pixels and the generated file is edited so that it comprises the spectra of all the pixels belonging to the droplets and the labels indicative of the valid pixels.

9. The method according to any of claims 1 to 8, further comprising a step of labelling the pixels based on attributes such as the type of virus, concentration, droplet fluid, material on which it is deposited and/or time since the deposition and modification of the file so that it comprises the generated labels.

10. The method according to any of claims 1 to 9, comprising a step of generating a colour scale representation of each generated label to carry out a visual review of the labelling, such that, if the labels are not correct, a labelling error is identified, or an error in the segmentation of the droplets or background samples.

**11.** The method according to any of claims 1 to 10, wherein the step of calculating a mean spectrum further comprises a step for generating graphs of the mean spectrum with a margin of error ($\pm$Error), equal to the standard deviation (STD) multiplied by a previously determined coefficient (No).

**12.** The method according to any of claims 1 to 11, further comprising a step of pre-processing the spectral records, prior to the step of extracting and quantifying the features thereof, which includes the application, to individual or mean spectra, of at least one filter or transformation from the following:

- a Savitzky-Golay filter, which enables the spectrum to be smoothed and noise to be reduced, which is applied using 5 for the degree of the polynomial and 31 as the number of bands that are used to calculate on each band of the spectra;
- a standard normal variate (SNV) transformation which subtracts the mean and divides by the standard deviation; and/or
- a correction of the base line.

**13.** The method according to any of claims 1 to 12, comprising the extraction of the spectrum from the surface on which the sample to be analysed has been deposited (reference spectrum or background spectrum).

**14.** The method according to any of claims 1 to 13, wherein in the step of extracting and quantifying the features of the spectra, a set of estimator parameters is calculated, which enable the physical and mathematical features of the numerical functions constituted by the spectra and the relationship thereof with the reference spectrum in a certain spectral band or range (E) to be quantified based on events seen in the spectral range or interval considered representing the estimators:

- amplitude (E1)
- curvature (E2)
- compression (E3)
- kurtosis (E4)
- length (E5)
- determination of the possible "S shape" of the spectrum, in other words, oscillatory functional form (E6)
- determination of the horizontality of the spectrum, in other words, of a plateau shape (E7)
- area using Heron's formula (E8)
- angle between the line of fit of a spectrum and that of the reference spectrum (E9),
- determination of the higher curve (with respect to the reference) (E10),
- area under the curve of the spectrum considered with respect to the area of the reference spectrum (E11),
- change of slope (E12),
- relative mean difference between the analysed spectrum and the reference spectrum (E13),
- difference between the mean value of the analysed spectrum and the reference spectrum, relative to the mean values and areas (E14) thereof,
- number of local maxima (E15),
- number of local minima (E16),
- square difference between the analysed spectrum and the reference spectrum (E17),
- square difference of the mean values of the analysed spectrum and the reference spectrum (E18),
- relative area under the spectrum and the reference (E19),
- relative difference between the spectrum and the reference (E20),
- relative mean square difference between the spectrum and the reference (E21).

**15.** The method according to any of claims 1 to 14, further comprising a step of modifying the file comprising the spectra of individual pixels, mean reference spectra, the calculated estimators and the bands of interest, replacing columns with features of the pixels corresponding to bands by the value of the estimators.

**16.** The method according to any of claims 1 to 15, further comprising a step of classifying a patient, based on the classification of the samples performed and the determination of the percentage they represent with respect to the total samples of the patient, evaluating this percentage of positive samples against a sample classification threshold, considering the patient positive if the percentage of positive samples is greater than the threshold, and negative otherwise.

**17.** The method according to any of claims 14 to 16, further comprising a step of determining the coefficients of linear interpolating polynomials of the values of the estimators E11, E13, E14, E17, E18, E19, E20 and E21 against the values of the concentrations of the samples analysed in each fluid and sample state, liquid droplet or dry residue, considered by means of the analysis of known samples.

18. The method according to any of claims 14 to 17, further comprising a step of quantifying the viral load in a pixel or positive sample using interpolating polynomials corresponding to the fluid and sample state (liquid droplets or dry residues) analysed, calculating the value of the estimators E11, E13, E14, E17, E18, E19, E20 and E21 for the spectrum of the pixel or region to be analysed and, by means of the aforementioned interpolating polynomial, determining the concentration to which it corresponds.

19. The method according to any of claims 14 to 18, wherein known diagnosis samples are analysed for classification learning using statistical or artificial intelligence algorithms, extracting a vector with the column corresponding to the diagnosis and a matrix with the estimators calculated for all the spectra.

20. The method according to any of claims 1 to 19, wherein the artificial intelligence algorithms are of the Pattern Recognition Network neural network type, wherein the neurons are of the sigmoid type, the first layer receives the inputs from the network, each subsequent layer is interconnected with the preceding one and the final layer produces the output of the network with output neurons of the softmax type, and in which a deep learning network of the feed-forward type is used, made up of hidden layers and an output layer, wherein each layer is made up of a number of neurons linked together and wherein each link has a different weight, such that the output layer generates an output variable value, of classification of the analysed spectrum, comprised between 0 and 1, which determines the probability of the processed spectrum being positive.

21. The method according to claims 1 to 20, further comprising a step of determining the classification threshold per pixel from which a positive or negative result is determined (for each pixel), by determining the value that optimises the sensitivity and specificity of the classification per pixel in an ROC curve calculated from the processing of known diagnosis samples.

22. The method according to claims 1 to 21, further comprising a step of determining the classification threshold per sample based on the proportion of positive pixels that are present in the same, choosing the classification thresholds per pixel and per sample, such that the sensitivity and specificity of the classification per sample is optimised on an ROC curve calculated from the processing of known diagnosis samples.

23. A computer program adapted to carry out the steps of the method according to any of claims 1 to 22.

24. A computer-readable storage medium comprising the computer program of claim 23.

**Fig. 1**

Image acquisition
(diffuse reflectance):
-White calibration image
-Black calibration image
-Image to be processed

Image file (raw format):
-White calibration image
-Black calibration image
-Image to be processed

**Fig. 2**

Selection of
folder of
image to be
processed

Open
-image to be
processed
-white and black
calibration images

Image cutout:
-Elimination of
peripheral areas
-Definition of region of
interest in the image
to be processed
(ROI)

Calibration: with white
and black calibration
images

Offset
calculation and
application

Transformation from
reflectance to
pseudoabsorbance

Rotation:
- Correction of possible
rotation effects of the
sensor
- Correction of image
orientation (horizontal or
vertical)

Correct
position?

NO

Rotation

YES

Generation of
images to be
processed (.bin
and .hdr files)

**Fig. 3**

**Fig. 4**

Open .csv file

↓

Open .hdr file

↓

Introducing:
1. Image name
2. Spectral range
3. Support (background) ma-
terial
4. Instant of time of recording
of the spectrum (status of the
sample)

↓

Check if the binary
mask corresponds to
the template of sample
collection

↓

Is the mask
introduced
correct?  → NO → It is required
to process
again in
Block 3.1

SI

↓

Labelling of each
sample:
1.Epidemiological
data
2. Demographic
data

↓

File (.xlsx)
creation of the
training set

**Fig. 5**

Check if the labelling corresponds to the template of sample collection

Correct labels?

NO → Label image again in block 3.2

YES

Correct segmentation?

NO → Process image again in block 2

YES

END

**Fig. 6**

Calculation of mean spectra of samples from individual pixel spectra

Selection of the file (.xlsx) corresponding to the image to be processed

Graphic representation of the mean spectrum ± Error

Calculation of the mean spectra of
- Background
- Sample

NO ◁ Apply error calculation? ▷ YES

Application of pre-processing to mean spectra:
-Savitzky-Golay filter
-SNV transformation
-Base line
-Alignment

(Visual or numerical) analysis of the curves

Application of pre-processing to mean spectra:
-Savitzky-Golay filter
-SNV transformation
-Base line
-Alignment

Calculation of mean spectrum and STD of:
- Background
- Sample

YES ◁ -Any artifacts? Any differences between spectra of samples of the same type? ▷ NO

Determining bands of interest

YES ◁ Graph representation of mean spectrum? ▷ NO

Application of KS independence test to:
- Full range
- Bands of interest

Calculation of suitable estimators for each band of interest

Calculation of suitable estimators for mean spectra

For training set samples: Obtention of coefficients of interpolation fitting polynomial of Estimator 15

NO ◁ Is the number of samples enough to apply AI? ▷ YES

Block 5

Block 6

**Fig. 7**

For each sample of the analysed image:

- determination of individual spectrum of each pixel
- calculation of estimators
- application of the PLS-DA statistical technique

Classification variable per pixel

**Fig. 8**

Input of:
-individual pixel spectra
-reference (background) spectrum
-BOIs ratio

For each individual pixel:
calculation of estimators in each
BOI

Create .xlsx file with the values of
the Estimators in each BOI for
each pixel

# Fig. 9

Neural network
construction: file
selection (.xlsx) of
sets of training,
validation and test
samples

Elimination of pixels
corresponding to
the background

Generation of a
matrix with the
estimators

Definition of the sample
sets of:
-Training: ~70%
-Validation: ~15%
-Test: ~ 15%

Network construction:

- number of hidden layers
- type of algorithm
- maximum number of
iterations
- maximum number of
iterations without
improvement
- error calculation function

Application of the
neural network

Classification
variable per
pixel

**Fig. 10**

Classification
result (positive or
negative) for each
pixel

Definition of classification
criterium per sample
(percentage of positive pixels)

Sample diagnosis
(droplet or area
with dry residue)

**Fig. 11**

Inputs:

- coefficients of the viral load interpolation polynomials
- for each individual pixel and each sample: calculated Estimator values and results of the classification of blocks 5 and 9

Viral load analysis type

For each sample (droplet or region with dry residue)

For each pixel

-Calculation of the Estimator E15 in the corresponding BOI (from the mean spectra of sample pixels)

-Calculation of the Estimator E15 in the corresponding BOI (from the individual spectra of each pixel)

Determination of the viral load of the sample by inverting the interpolation polynomial

Determination of the viral load of each pixel by inverting the interpolation polynomial

Mean viral load of the component pixels of the sample

Viral load of the sample

**Fig. 12**

Classification
variable per pixel

Classification per
pixel and per sample

NO

END

Known
diagnosis
samples?

YES

Obtaining results:
-Confusion matrices
-ROC curves

STATISTICAL
CLASSIFICATION

AI
CLASSIFICATION

Block 5

Block 7

**Fig. 13**

Europäisches
Patentamt

European
Patent Office

Office européen
des brevets

**EUROPEAN SEARCH REPORT**

Application Number

EP 21 38 2386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE HOONSOO ET AL: "Detection of cucumber green mottle mosaic virus-infected watermelon seeds using a near-infrared (NIR) hyperspectral imaging system: Application to seeds of the "Sambok Honey" cultivar", BIOSYSTEMS ENGINEERING, ELSEVIER, AMSTERDAM, NL, vol. 148, 15 June 2016 (2016-06-15), pages 138-147, XP029632594, ISSN: 1537-5110, DOI: 10.1016/J.BIOSYSTEMSENG.2016.05.014 * Section 2.2.1; page 140, left-hand column * * section 2.4.3; page 141, right-hand column * * section 2.4.4; page 141, right-hand column * * figure 2 * * section 3; paragraph [0142] * | 1-24 | INV. G06K9/00 |
| A | SANTOS MARFRAN C.D. ET AL: "ATR-FTIR spectroscopy for virus identification: A powerful alternative", BIOMEDICAL SPECTROSCOPY AND IMAGING 2015 IOS PRESS NLD, vol. 9, no. 3-4, 14 January 2021 (2021-01-14), pages 103-118, XP055848522, ISSN: 2212-8794, DOI: 10.3233/BSI-200203 Retrieved from the Internet: URL:https://pdfs.semanticscholar.org/6cee/a64c57c6f01086eb0d7f54f83c10767f05f5.pdf?_ga=2.215147422.866913762.1633527255-1589535056.1633428751> * section 6.2; page 110 - page 111; figure 6 * | 1-24 | TECHNICAL FIELDS SEARCHED (IPC) G06K |

-/--

The present search report has been drawn up for all claims

| Place of search | Date of completion of the search | Examiner |
|---|---|---|
| The Hague | 7 October 2021 | Stan, Johann |

EPO FORM 1503 03.82 (P04C01)

Europäisches
Patentamt

European
Patent Office

Office européen
des brevets

**EUROPEAN SEARCH REPORT**

Application Number

EP 21 38 2386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JEREMY D. DRISKELL ET AL: "Rapid and Sensitive Detection of Rotavirus Molecular Signatures Using Surface Enhanced Raman Spectroscopy", PLOS ONE, vol. 5, no. 4, 19 April 2010 (2010-04-19), page e10222, XP055178522, DOI: 10.1371/journal.pone.0010222 * page 2, left-hand column, paragraph 3 - paragraph 4 * | 1-24 | |
| A | YEN-PENG HO ET AL: "Advances in mass spectrometry for the identification of pathogens", MASS SPECTROMETRY REVIEWS, vol. 30, no. 6, 9 May 2011 (2011-05-09), pages 1203-1224, XP055059785, ISSN: 0277-7037, DOI: 10.1002/mas.20320 * page 1212, left-hand column, paragraph 3 * | 1-24 | |
| A | CN 111 443 072 A (SUZHOU YIQING ENVIRONMENTAL TECH CO LTD) 24 July 2020 (2020-07-24) * the whole document * | 1-24 | TECHNICAL FIELDS SEARCHED (IPC) |
| A | CN 111 832 477 A (UNIV HUAZHONG SCIENCE TECH) 27 October 2020 (2020-10-27) * the whole document * | 1-24 | |

The present search report has been drawn up for all claims

| Place of search | Date of completion of the search | Examiner |
|---|---|---|
| The Hague | 7 October 2021 | Stan, Johann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 2386

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2021

| Patent document cited in search report | | Publication date | Patent family member(s) | Publication date |
|---|---|---|---|---|
| CN 111443072 | A | 24-07-2020 | NONE | |
| CN 111832477 | A | 27-10-2020 | NONE | |

EPO FORM P0459

For more details about this annex : see Official Journal of the European Patent Office, No. 12/82